(19) Europäisches Patentamt
European Patent Office
Office européen des brevets

(11) **EP 4 292 980 B1**

(12) **EUROPEAN PATENT SPECIFICATION**

(45) Date of publication and mention
of the grant of the patent:
**25.03.2026 Bulletin 2026/13**

(21) Application number: **22752691.0**

(22) Date of filing: **04.02.2022**

(51) International Patent Classification (IPC):
**C01B 17/80** (2006.01)   **C01B 17/74** (2006.01)
**C01B 17/765** (2006.01)   **C01B 17/79** (2006.01)
**C01C 1/24** (2006.01)

(52) Cooperative Patent Classification (CPC):
**C01B 17/74; C01B 17/765; C01B 17/79;**
**C01B 17/80; C01C 1/24;** Y02P 20/129

(86) International application number:
**PCT/JP2022/004391**

(87) International publication number:
**WO 2022/172864 (18.08.2022 Gazette 2022/33)**

(54) **METHOD FOR PRODUCING DILUTE SULFURIC ACID**

**VERFAHREN ZUR HERSTELLUNG VERDÜNNTER SCHWEFELSÄURE**

**MÉTHODE DE PRODUCTION D'ACIDE SULFURIQUE DILUÉ**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2021 PCT/JP2021/004925**

(43) Date of publication of application:
**20.12.2023 Bulletin 2023/51**

(73) Proprietor: **JFE Steel Corporation**
**Tokyo 100-0011 (JP)**

(72) Inventors:
• **NISHIDE, Tsutomu**
**Tokyo 105-0011 (JP)**
• **KUSUDA, Hiromasa**
**Kobe-shi, Hyogo 650-8670 (JP)**
• **MIZUNO, Yuta**
**Kobe-shi, Hyogo 650-8670 (JP)**
• **WATANABE, Shuhei**
**Kobe-shi, Hyogo 650-8670 (JP)**
• **KOYAMA, Naomichi**
**Kobe-shi, Hyogo 650-8670 (JP)**
• **HASEBE, Yusuke**
**Kobe-shi, Hyogo 650-8670 (JP)**

• **HINAGA, Aoi**
**Kobe-shi, Hyogo 650-8670 (JP)**
• **MIYAZAKI, Hitoshi**
**Kobe-shi, Hyogo 653-0834 (JP)**
• **OKADA, Hideaki**
**Tokyo 100-0011 (JP)**
• **KAWAHATA, Satoshi**
**Tokyo 100-0011 (JP)**
• **ISHIDA, Yuichiro**
**Tokyo 100-0011 (JP)**

(74) Representative: **Grünecker Patent- und
Rechtsanwälte
PartG mbB
Leopoldstraße 4
80802 München (DE)**

(56) References cited:
WO-A1-2020/135135   CN-A- 103 172 087
CN-A- 109 384 200   CN-A- 110 282 606
CN-A- 111 071 995   JP-A- 2013 539 006
JP-A- 2021 031 305   JP-A- H01 160 809
JP-A- H1 095 603    JP-A- H1 135 958
JP-A- S4 723 391    JP-A- S5 547 210
JP-A- S5 717 410    JP-A- S5 727 135
JP-B1- S4 411 781    US-A- 2 172 617

## Description

Technical Field

The present invention relates to a dilute sulfuric acid manufacturing method for manufacturing dilute sulfuric acid.

Background Art

Sulfuric acid ($H_2SO_4$) is a strong acid and is manufactured in large quantities and used in various fields. Sulfuric acid is broadly classified into concentrated sulfuric acid for industrial use, which is represented by a sulfuric acid concentration of 90 wt.% or more, and dilute sulfuric acid for industrial use, which is represented by a sulfuric acid concentration of less than 90 wt.%, and these sulfuric acids have different properties. Of the concentrated and dilute sulfuric acids, the dilute sulfuric acid is strongly acidic but does not have an oxidizing action or a dehydrating action unlike the concentrated sulfuric acid, but the dilute sulfuric acid exhibits strong corrosiveness to metal materials and the like. Dilute sulfuric acid is used in various applications such as industrial products, pharmaceuticals, agricultural chemicals, and reagents.

Sulfur-containing raw materials are required for the manufacturing of sulfuric acid. As the raw material, a desulfurization waste liquid and recycled sulfur from a gas (coke oven gas: hereinafter, "COG") generated in a process of manufacturing coke used for ironmaking and the like, an SOx-containing gas discharged from a copper refining process, and the like are used.

In the related art, for example, a method of Patent Literature 1 is known as a method for manufacturing sulfuric acid. This literature describes: (a) combusting a carbon-containing fuel to supply heat for forming sulfur dioxide from a sulfur-containing material, and supplying an oxygen-enriched gas (hereinafter, referred to as an oxygen-containing gas) selected from pure oxygen and mixed gases containing 30 vol.% or more of oxygen to support combustion of the fuel; (b) forming a mixed gas containing sulfur dioxide and a gas generated from the combustion of the fuel; (c) drying the mixed gas, and obtaining the mixed gas which contains 30 vol.% or more of carbon dioxide and more than 16 vol.% of sulfur dioxide after the drying; and the like.

In addition, although there is no description of the manufacturing of dilute sulfuric acid, Patent Literature 2 discloses a wet treatment system for a desulfurization waste liquid. This system includes a step of supplying a desulfurization waste liquid together with a fuel gas and air to a combustion device and generating an $SO_2$-containing process gas by combusting the desulfurization waste liquid at a temperature of 1,050 to 1,100°C, a step of cooling the process gas by heat exchange, a step of supplying the cooled process gas to a reaction device after passing the process gas through a denitration reactor to convert $SO_2$ into $SO_3$, a step of generating sulfuric acid by passing an $SO_3$-containing process gas through a condenser and an acid mist trap, and a step of processing $SO_2$ remaining in exhaust gas from the acid mist trap with ammonia water in an exhaust gas processing device to collect ammonium sulfate. The combustion device is supplied with air.

Similarly, although there is no description of the manufacturing of dilute sulfuric acid, Patent Literature 3 describes a method of incorporating an oxygen enriching device and supplying oxygen-enriched air to a sulfur combustion furnace and/or a converter, in a method for manufacturing catalytic sulfuric acid by using a gas obtained by combusting sulfur as a raw material. Further, relevant prior art documents are US 2 172 617 A, WO 2020/135135 A1 and CN 111 071 995 A.

Citation List

Patent Literature

    Patent Literature 1: JP 2519691 B (Claim 1 or the like)
    Patent Literature 2: CN 110282606 A
    Patent Literature 3: JP 01-160809 A

Summary of Invention

Technical Problem

Since the method of Patent Literature 1 includes a step of drying a mixed gas, an object thereof is to manufacture concentrated sulfuric acid having a high sulfuric acid concentration instead of dilute sulfuric acid. In general, regarding manufacture of dilute sulfuric acid, a method of manufacturing concentrated sulfuric acid and then diluting the concentrated sulfuric acid with water, or a sulfuric acid manufacturing apparatus equipped with a special temperature regulator capable of regulating a sulfuric acid condensation temperature (boiling point) is employed. For the former method, equipment such as a dehumidification tower that reduces a temperature of a high-temperature combustion gas once to less than 100°C and dehumidifies the combustion gas in order to adjust a water concentration and a drying tower that uses a dehydration action with concentrated sulfuric acid needs to be provided. In addition, along with the dehumidification tower and the drying tower, equipment for a device for performing reheating to a temperature of 400 to 450°C (such as a heat exchanger), piping, a rotating machine, and the like need to be provided. On the other hand, for the latter method, a very expensive special temperature regulator capable of regulating a sulfuric acid condensation temperature (boiling point) is necessary. Hence, the methods have a problem of a cost increase in manufacturing of dilute sulfuric acid.

In addition, sulfuric acid manufactured by the system described in Patent Literature 2 is sulfuric acid having a high concentration of 93 wt.%, and the system does not manufacture the dilute sulfuric acid having a concentration of 90 wt.% or less. This literature describes that water is replenished to a washing tower in a later stage of combustion means and an early stage of reaction means; however, since an outlet temperature of the washing tower is about a saturated water vapor temperature and hardly generates water vapor, a water content in a combustion gas is not increased. Therefore, even if water is supplied to the washing tower, dilute sulfuric acid cannot be manufactured. Moreover, in the system of Patent Literature 2, air is supplied to a combustion device, and a purification device and a denitration reactor are essential configurational elements in a later stage of the combustion device.

Patent Literature 3 does not describe manufacture of dilute sulfuric acid. In addition, an oxygen enriching device is used for the purpose of increasing an equilibrium conversion rate from $SO_2$ to $SO_3$ by elevating a relative concentration of $O_2$ with respect to $SO_2$, and there is no description of nitrogen oxide ($NO_x$).

An object of the present invention is to provide a dilute sulfuric acid manufacturing apparatus and a method for manufacturing dilute sulfuric acid capable of inexpensively manufacturing dilute sulfuric acid. Solution to Problem

The present inventors have found that dilute sulfuric acid can be manufactured by using, as a raw material, a material containing a high water component, in addition to a sulfur component and a nitrogen component, and combusting the raw material with an oxygen-containing gas having a high oxygen concentration, and the present invention is completed.

Not forming part of the current invention but for the sake of completeness of description, there is provided a dilute sulfuric acid manufacturing apparatus including: raw material supply means for supplying a raw material containing at least a sulfur component, a nitrogen component, and 40 to 80 wt.% or more of a water component; oxygen-containing gas generating means for generating an oxygen-containing gas having an oxygen concentration of 22 to 40 vol.%; combustion means for combusting the raw material with the oxygen-containing gas to generate a combustion gas containing sulfur oxide (SOx: here, $1 \leq x < 3$) and 10 vol.% or more of a water component; cooling means for cooling the combustion gas; reaction means for oxidizing the sulfur oxide (SOx) with a catalyst to generate a reaction gas containing sulfur trioxide ($SO_3$); and dilute sulfuric acid generating means for cooling the reaction gas to generate dilute sulfuric acid, wherein less than 90 wt.% of the dilute sulfuric acid is generated only from the water component of the raw material without adding water at least from the combustion means to the dilute sulfuric acid generating means.

In the present invention, sulfuric acid is manufactured in a state of containing a certain amount or more of water by using, as the raw material, a material containing a high water component, in addition to a sulfur component and a nitrogen component, and combusting the raw material with the oxygen-containing gas having a high oxygen concentration. Therefore, the sulfuric acid to be manufactured is the dilute sulfuric acid, and it is not necessary to provide dehumidification equipment and drying equipment to manufacture sulfuric acid as in the related art. Hence, the costs required for manufacturing dilute sulfuric acid can be reduced as compared with the related art.

In addition, in the present invention, less than 90 wt.% of dilute sulfuric acid can be generated only from the water of the raw material without adding water from the combustion means to the dilute sulfuric acid generating means. In the present invention, since a special device such as a water supply device is not required, the manufacturing costs of the dilute sulfuric acid can be reduced.

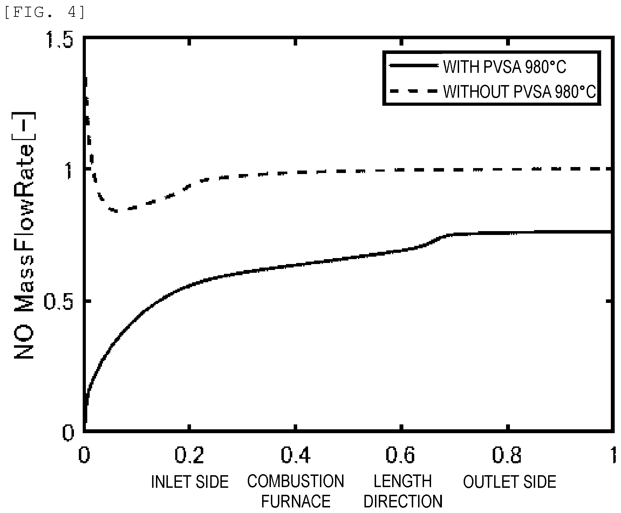

Moreover, in the present invention, the raw material is combusted with an oxygen-containing gas having an oxygen concentration of 22 to 40 vol.%. In general, when the oxygen concentration or the combustion temperature of the raw material during combustion is increased, nitrogen oxides (NOx) are easily generated. However, in the present invention, by using the oxygen-containing gas having an oxygen concentration of 22 to 40 vol.%, the amount of the generated exhaust gas itself can be reduced (see exhaust gas amount of 10,951 $Nm^3$/h when a PVSA 45d to be described below is provided and exhaust gas amount of 13,207 $Nm^3$/h without PVSA 45d). As a result, an amount of nitrogen oxide contained in the combustion gas does not increase, and conversely, the amount of NOx contained in the combustion gas is smaller than that in a case where air (oxygen concentration of 21 vol.%) is used (see Fig. 4 described below).

In this case, the raw material is combusted by using the oxygen-containing gas having an oxygen concentration of 22 to 40 vol.% generated by the oxygen-containing gas generating means, wherein an amount of nitrogen oxide in the combustion gas generated by the combustion means is made smaller than an amount of nitrogen oxide in a combustion gas generated on assumption that the raw material is combusted under the same condition by using air having an oxygen concentration of 21 vol.%.

As described above, by combusting the raw material using the oxygen-containing gas, the amount of nitrogen oxide contained in the generated combustion gas can be reduced as compared with the case where the raw material is combusted using normal air.

Preferably, no denitrating equipment is provided at least between the combustion means and the reaction means.

In this case, preferably, the combustion means combusts the raw material at a temperature of 900 to 1,100°C.

Since the oxygen concentration is higher in the present invention than in a sulfuric acid manufacturing plant in the related art, it is possible to further reduce a combustion improver (COG or the like) required for maintaining combustion, and thus the combustion costs can be reduced. In general, when the oxygen concentration is increased or the combustion temperature is increased, air pollutants such as nitrogen oxides (NOx) are likely to be generated. However, in the present invention, even when the raw material or the combustion improver is combusted at a high oxygen concentration, the amount of nitrogen oxides to be generated is not increased, and thus it is possible to reduce an environmental load. Hence, since there is no or little need to provide equipment for removing nitrogen oxides, the manufacturing costs of the dilute sulfuric acid can also be reduced.

In this case, preferably, the combustion means combusts the raw material at 1,050°C or lower.

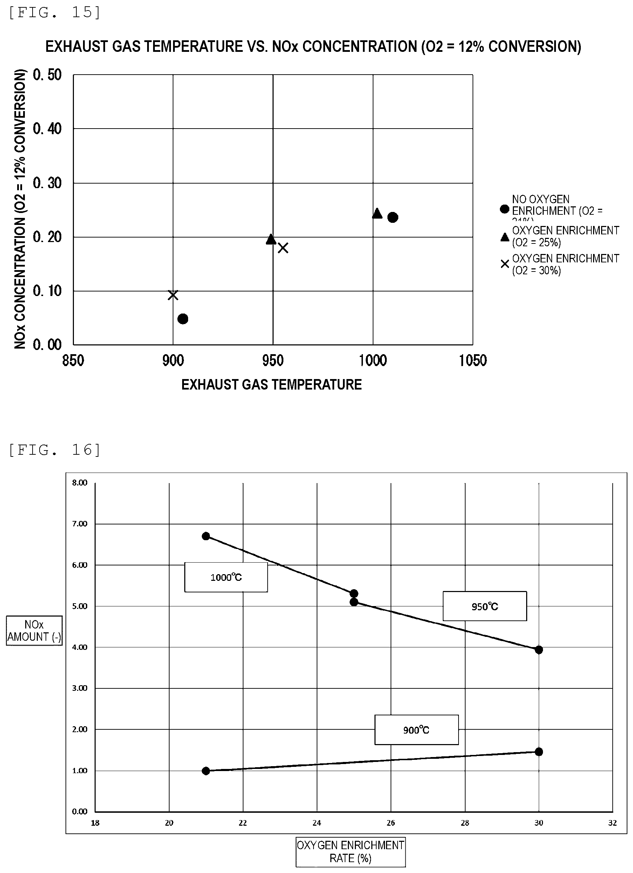

As described above, in the combustion means, by setting the combustion temperature at 1050°C or lower, an NOx concentration in the combustion gas can be lowered (since the NOx concentration also increases as the temperature increases as illustrated in Fig. 15 to be described below), and thus, it is possible to eliminate the need for special denitrating equipment in the following processes.

Moreover, in the combustion means, the oxygen-containing gas introduced from the oxygen-containing gas generating means has an oxygen concentration within a range of 22 to 30 vol.%, and the combustion gas generated by the combustion means has an oxygen concentration within a range of 2.0 to 7.0 vol.%.

In the combustion means, an $SO_3$ conversion rate can be maintained at a value equivalent to that in a case of air (no oxygen enrichment) combustion by controlling the oxygen concentration in the combustion exhaust gas while reducing the combustion exhaust gas amount by introducing the oxygen-containing gas under the above conditions. Therefore, it is also possible to set the $SO_3$ conversion rate to be described below in the combustion gas generated by the combustion means to a low value, for example, in the range of 1.0 to 3.0%.

$$SO_3 \text{ conversion rate} = (SO_3/SOx) \times 100$$

(Here, $SO_3$ represents a volume concentration of $SO_3$ contained in the combustion gas, and SOx represents a volume concentration of SOx contained in the combustion gas.)

Consequently, it can be accepted in the same manner as in the case of air (no oxygen enrichment) supply without affecting an acid dew point in the exhaust heat boiler positioned downstream from the combustion furnace wake.

Moreover, preferably, the dilute sulfuric acid manufacturing apparatus further includes gas removing means for removing unreacted sulfur dioxide in the dilute sulfuric acid generating means.

As described above, since the unreacted sulfur dioxide is removed, sulfur dioxide can be detoxified without being released into the environment.

In this case, preferably, the gas removing means causes the unreacted sulfur dioxide to react with ammonia to generate ammonium sulfite $((NH_4)_2SO_3)$, and the ammonium sulfite is oxidized and collected as ammonium sulfate $((NH_4)_2SO_4)$.

As described above, the unreacted sulfur dioxide can react with ammonia to produce ammonium sulfite and then can be oxidized and collected as ammonium sulfate.

In this case, preferably, sulfur dioxide is absorbed with ammonia water, or sulfur dioxide is absorbed with ammonia contained in a desulfurization waste liquid, and the desulfurization waste liquid obtained after reaction with the unreacted sulfur dioxide is recycled as the raw material.

As described above, by using the desulfurization waste liquid as an ammonia source and recycling the desulfurization waste liquid after reaction with sulfur dioxide as the raw material, the desulfurization waste liquid can be effectively used.

Furthermore, preferably, as the combustion means, a combustion furnace including a partially open lattice brick inside is employed.

Since a brick has a heat retaining effect when heated, an unreacted raw material can be combusted later. In addition, the lattice brick has an appropriate opening in addition to a reduction of radiation to a downstream device, and thus this results in a rectification effect to improve flow of the raw material, the oxygen-containing gas, and the combustion gas. Therefore, the combustion of the raw material by the combustion means can be efficiently performed.

In addition, preferably, the reaction means for oxidizing the sulfur oxide (SOx) with a catalyst to generate a reaction gas containing sulfur trioxide (SO$_3$) also has a denitration function with vanadium pentoxide (V$_2$O$_5$) as the catalyst.

As described above, since the catalyst of the reaction means is vanadium pentoxide (V$_2$O$_5$), and the reaction means also has the denitration function, oxidation of the sulfur oxide and decomposition of the nitrogen component can be performed simultaneously.

In this case, in a case where a higher denitration rate is required, preferably, the reaction means further has a denitration catalyst containing titanium oxide (TiO$_2$) as a co-catalyst in addition to the catalyst.

In conversion of the sulfur oxide, when a concentration of the nitrogen component (for example, undecomposed NH$_3$ or NOx such as NO or NO$_2$) generated by combustion in the raw material is high and a high denitration rate is required, the conversion of the sulfur oxide proceeds preferentially over the decomposition of the nitrogen component in vanadium pentoxide without containing a co-catalyst. Therefore, by providing the denitration catalyst containing the co-catalyst as described above, the decomposition of the nitrogen component can proceed by giving priority to the reaction of the decomposition of the nitrogen component rather than the conversion of the sulfur oxide.

Preferably, the reaction means has the catalyst provided in a plurality of stages, and a temperature of a converted gas is lowered without depending on a heat exchanger by directly mixing atmosphere drawn from outside with the converted gas heated by an exothermic reaction due to the oxidation of the sulfur oxide by the catalyst in an early stage of the plurality of stages and lowering the temperature to a temperature suitable for a catalytic reaction in a later stage.

As described above, the temperature can be lowered in the later stage by cooling the converted gas in the early stage of the multi-stage catalyst. Therefore, it is possible to prevent a decrease in reaction rate by an increase in temperature in the later stage, and in addition to a cooling effect, there is an effect of accelerating the reaction by increasing a partial pressure of oxygen required for conversion by directly taking in air from the outside.

In addition, the atmosphere is drawn by the reaction means (converter) instead of the combustion means (combustion furnace) of the most upstream equipment to replenish oxygen. In this manner, the gas passing capacity of the combustion furnace or the boiler of upstream equipment can be further reduced, and it is effective to reduce the size of the combustion furnace or the boiler and to reduce an amount of a combustion improver of the combustion furnace. Moreover, according to the above configuration, the converted gas in the converter is also cooled, so that the heat exchanger for cooling can be omitted.

In addition, the reaction means may use both indirect cooling means for indirectly cooling the converted gas by a heat exchanger and cooling of the converted gas by direct mixing with the atmosphere.

As described above, the cooling is performed by the indirect cooling means in addition to cooling by direct mixing with the atmosphere drawn from the outside. In this manner, a gas temperature of the catalyst in the later stage can be efficiently lowered to a temperature suitable for the catalytic reaction, and an increase in gas amount can be suppressed by reducing a mixing amount of the atmosphere.

Preferably, the combustion means supplies the oxygen-containing gas to a raw material having less than 5,000 kJ/kg to perform combustion and supplies air to a raw material having 5,000 kJ/kg or more to perform combustion.

Otherwise, the combustion means may supply the oxygen-containing gas to the raw material having less than 5,000 kJ/kg and perform combustion and, in a case of a small amount of the raw material having less than 5,000 kJ/kg, supply the oxygen-containing gas to perform combustion even with a raw material having 5,000 kJ/kg or more or a combustion improver (COG or the like).

When the raw material has less than 5,000 kJ/kg, combustion becomes unstable, and thus combustion can be stabilized by supplying the oxygen-containing gas having a high oxygen concentration and performing combustion. In a case of the raw material having 5,000 kJ/kg or more, since the raw material is easily combusted by air, air may be supplied or an oxygen-containing gas may be supplied. That is, the oxygen-containing gas may be supplied to all of the raw materials or some of the raw materials according to a supply ratio of the raw materials.

As described above, by distributing the oxygen-containing gas for each raw material, the combustion of the raw materials can be efficiently performed.

In addition, preferably, the dilute sulfuric acid generating means adjusts a concentration of the dilute sulfuric acid by controlling a temperature of a circulating sulfuric acid aqueous solution up and down.

In the dilute sulfuric acid generating means, a concentration of the dilute sulfuric acid to be generated can be adjusted by controlling the temperature of the circulating sulfuric acid aqueous solution up and down. Therefore, for example, when the water in the desulfurization waste liquid is 50 wt.%, the temperature of the dilute sulfuric acid is increased to around 80°C, and thereby the dilute sulfuric acid worth as a trading product having around 70 wt.% can be generated.

In addition, preferably, the dilute sulfuric acid manufacturing apparatus further includes sulfuric acid concentrating means for concentrating the dilute sulfuric acid generated by the dilute sulfuric acid generating means to have a concentration of 70 to 80 wt.%.

As described above, by concentrating the dilute sulfuric acid generated by the dilute sulfuric acid generating means to have the concentration of 70 to 80 wt.%, the dilute sulfuric acid having the concentration of 70% or more worth as a trading product can be generated, and the dilute sulfuric acid having the concentration of 70% or more (preferably around 75%) which can cope with corrosion resistance in a product line made of carbon steel can be generated.

In addition, preferably, the dilute sulfuric acid generating means performs direct contact cooling of the reaction gas by using a part of a generated sulfuric acid aqueous solution, without including equipment for indirectly cooling the reaction gas.

As described above, by directly cooling the reaction gas with the part of the generated sulfuric acid aqueous solution in the dilute sulfuric acid generating means, the dilute sulfuric acid generating means does not need to include a special indirect cooling device.

In addition, preferably, the cooling means is a exhaust heat boiler including a boiler, and the exhaust heat boiler includes water supply means for supplying water into the boiler, and heat exchanging means for evaporating the water with the combustion gas to generate steam and cools the combustion gas by heat exchange.

In this case, preferably, the exhaust heat boiler further includes outlet temperature regulating means having a boiler bypass and an adjustment valve for making an outlet temperature of the boiler constant with respect to a variation in the outlet temperature.

As described above, by using the exhaust heat boiler as the cooling means and keeping the temperature of a boiler outlet constant, it is possible to prevent the temperature of the outlet of the boiler from varying due to a change of the raw material and contamination of a boiler water pipe and to supply a reactive gas having a constant temperature to the reaction means.

In addition, preferably, in the dilute sulfuric acid generating means, a water amount of the raw material is adjusted to adjust a concentration of the dilute sulfuric acid generated by the dilute sulfuric acid generating means without adding water from the combustion means to the dilute sulfuric acid generating means.

As described above, by preparing the water amount of the raw material, the concentration of dilute sulfuric acid can be adjusted without adding water.

According to the present invention, there is provided a method for manufacturing dilute sulfuric acid, including: a raw material supply step of supplying a raw material containing at least a sulfur component, a nitrogen component, and 40 to 80 wt.% or more of a water component; an oxygen-containing gas generating step of generating an oxygen-containing gas having an oxygen concentration of 22 to 40 vol.%; a combustion step of combusting the raw material with the oxygen-containing gas to generate a combustion gas containing sulfur oxide (SOx: here, $1 \leq x < 3$) and 10 vol.% or more of a water component; a cooling step of cooling the combustion gas; a reaction step of oxidizing the sulfur oxide (SOx) with a catalyst to generate a reaction gas containing sulfur trioxide ($SO_3$); and a dilute sulfuric acid generating step of cooling the reaction gas to generate dilute sulfuric acid. Less than 90 wt.% of dilute sulfuric acid is generated only from the water component of the raw material without adding water at least from the combustion step to the dilute sulfuric acid generating step.

In the present invention, sulfuric acid is manufactured in a state of containing a certain amount or more of water by using, as the raw material, a material containing a high water component, in addition to a sulfur component and a nitrogen component, and combusting the raw material with the oxygen-containing gas having a high oxygen concentration. Therefore, the sulfuric acid to be manufactured is the dilute sulfuric acid, and it is not necessary to provide dehumidification equipment and drying equipment to manufacture sulfuric acid as in the related art. Hence, the costs required for manufacturing dilute sulfuric acid can be reduced as compared with the related art. In addition, in the present invention, less than 90 wt.% of dilute sulfuric acid can be generated only from the water of the raw material without adding water from the raw material supply step to the dilute sulfuric acid generating step. Consequently, a special device such as a water supply device is not required, and thus the manufacturing costs of the dilute sulfuric acid can be reduced.

In addition, in the present invention, since the raw material is combusted with the oxygen-containing gas having the oxygen concentration of 22 to 40 vol.%, the amount of NOx contained in the combustion gas can be reduced as compared with the case of using air. By using the oxygen-containing gas having the high oxygen concentration, the amount of the generated exhaust gas itself can also be reduced.

In this case, the raw material is combusted by using the oxygen-containing gas having the oxygen concentration of 22 to 40 vol.% generated in the oxygen-containing gas generating step, an amount of nitrogen oxide in the combustion gas generated by the combustion step is made smaller than an amount of nitrogen oxide in a combustion gas generated on assumption that the raw material is combusted under the same condition by using air having an oxygen concentration of 21 vol.%.

As described above, by combusting the raw material using the oxygen-containing gas, the amount of nitrogen oxide contained in the generated combustion gas can be reduced as compared with the case where the raw material is combusted using normal air.

Preferably, no denitrating equipment is provided at least between the combustion step and the reaction step.

In this case, preferably, in the combustion step, the raw material is combusted at a temperature of 900 to 1,100°C.

Since the oxygen concentration is higher in the present invention, it is possible to further reduce a combustion improver (COG or the like) required for maintaining combustion, and thus the combustion costs can be reduced. In general, when the oxygen concentration is increased or the combustion temperature is increased, air pollutants such as nitrogen oxides (NOx) are likely to be generated. However, in the present invention, even when the raw material is combusted at a high oxygen concentration, the amount of nitrogen oxides generated is reduced, and thus it is possible to reduce an environmental load. Hence, since there is no or little need to provide equipment for removing nitrogen oxides, the manufacturing costs of the dilute sulfuric acid can also be reduced.

In this manner, preferably, in the combustion step, the raw material is combusted at a temperature of 1,050°C or lower.

As described above, in the combustion step, by lowering the combustion temperature to 1050°C or lower, an NOx concentration in the combustion gas can be lowered, and thus, it is possible to eliminate the need for special denitrating equipment in the following processes.

Moreover, in the combustion step, the oxygen-containing gas introduced in the oxygen-containing gas generating step has an oxygen concentration within a range of 22 to 30 vol.%, and the combustion gas generated in the combustion step has an oxygen concentration within a range of 2.0 to 7.0 vol.%.

In the combustion step, an $SO_3$ conversion rate can be maintained at a value equivalent to that in a case of no oxygen enrichment by controlling the oxygen concentration in the combustion exhaust gas while reducing the combustion exhaust gas amount by introducing the oxygen-containing gas under the above conditions. Therefore, it is also possible to set the $SO_3$ conversion rate in the combustion gas generated in the combustion step to a low value, for example, in the range of 1.0 to 3.0%.

Consequently, it can be accepted in the same manner as in the case of air (no oxygen enrichment) combustion without affecting an acid dew point in the exhaust heat boiler positioned downstream from the combustion furnace wake.

Moreover, preferably, the method for manufacturing dilute sulfuric acid further includes a gas removing step of removing unreacted sulfur dioxide in the dilute sulfuric acid generating step.

As described above, since the unreacted sulfur dioxide is removed, sulfur dioxide can be detoxified without being released into the environment.

In this case, preferably, in the gas removing step, the unreacted sulfur dioxide is caused to react with ammonia to generate ammonium sulfite $((NH_4)_2SO_3)$, and the ammonium sulfite is oxidized and collected as ammonium sulfate $((NH_4)_2SO_4)$.

As described above, the unreacted sulfur dioxide can react with ammonia to produce ammonium sulfite and then can be oxidized and collected as ammonium sulfate.

In this case, preferably, sulfur dioxide is absorbed with ammonia water, or sulfur dioxide is absorbed with ammonia contained in a desulfurization waste liquid, and the desulfurization waste liquid obtained after reaction with the unreacted sulfur dioxide is recycled as the raw material.

As described above, by using the desulfurization waste liquid as an ammonia source and recycling the desulfurization waste liquid after reaction with sulfur dioxide as the raw material, the desulfurization waste liquid can be effectively used.

Furthermore, preferably, in the combustion step, a combustion furnace including a partially open lattice brick inside is employed.

As described above, since the brick has a heat holding effect when heated, the uncombusted raw material can be combusted later. In addition, the lattice brick has an appropriate opening in addition to a reduction of radiation to a downstream device, and thus this results in a rectification effect to improve flow of the raw material, the oxygen-containing gas, and the combustion gas. Therefore, the combustion of the raw material by the combustion means can be efficiently performed.

In addition, preferably, in the reaction step, a denitration function is also fulfilled with vanadium pentoxide $(V_2O_5)$ as the catalyst.

As described above, since the catalyst in the reaction step is vanadium pentoxide $(V_2O_5)$, and the reaction step also has the denitration function, oxidation of the sulfur oxide and decomposition of the nitrogen component can be performed simultaneously.

In this case, in a case where a higher denitration rate is required, preferably, in the reaction step, a denitration catalyst containing titanium oxide $(TiO_2)$ is further used as a co-catalyst in addition to the catalyst.

In conversion of the sulfur oxide, when a concentration of the nitrogen (for example, undecomposed $NH_3$ or NOx such as NO or $NO_2$) generated by combustion in the raw material is relatively high, the conversion of the sulfur oxide proceeds preferentially over the decomposition of the nitrogen component in vanadium pentoxide without containing a co-catalyst. Therefore, by providing the denitration catalyst containing the co-catalyst as described above, the decomposition of the nitrogen component can proceed by giving priority to the reaction of the decomposition of the nitrogen component rather than the conversion of the sulfur oxide.

Preferably, in the reaction step, the catalyst is provided in a plurality of stages, and a temperature of a converted gas is lowered without depending on a heat exchanger by directly mixing atmosphere drawn from outside with the converted gas heated by an exothermic reaction due to the oxidation of the sulfur oxide by the catalyst in an early stage of the plurality of stages and lowering the temperature to a temperature suitable for a catalytic reaction in a later stage.

As described above, the temperature can be lowered in the later stage by cooling the converted gas in the early stage of the multi-stage catalyst. Therefore, it is possible to prevent a decrease in reaction speed by an increase in temperature at the later stage. In addition, in addition to a cooling effect, it is possible to supply a shortage of oxygen required for conversion by directly taking in air from the outside. In addition, oxygen is replenished in the reaction step (converter) instead of the combustion step (combustion furnace) of the most upstream equipment. In this manner, the gas passing capacity of the combustion furnace or the boiler of upstream equipment can be further reduced, and it is effective to reduce the size of the combustion furnace or the boiler and to reduce an amount of a combustion improver. Moreover, according to the above configuration, the heat exchanger of the converter can be omitted.

In addition, the reaction step may include both an indirect cooling step of indirectly cooling the converted gas by the heat exchanger and cooling of the converted gas by direct mixing with the atmosphere.

As described above, the cooling is performed in the indirect cooling step in addition to cooling by direct mixing with the atmosphere drawn from the outside. In this manner, a gas temperature of the catalyst in the later stage can be efficiently lowered to a temperature suitable for the catalytic reaction, and an increase in gas amount can be suppressed by reducing a mixing amount of the atmosphere.

Preferably, in the combustion step, the oxygen-containing gas is supplied to a raw material having less than 5,000 kJ/kg to cause combustion, and air is supplied to a raw material having 5,000 kJ/kg or more to cause combustion.

Otherwise, in the combustion step, the oxygen-containing gas may be supplied to a raw material having less than 5,000 kJ/kg to cause combustion and, in a case of a small amount of the raw material having less than 5,000 kJ/kg, the oxygen-containing gas may be supplied to cause combustion even with a raw material having 5,000 kJ/kg or more or a combustion improver (COG or the like).

When the raw material has less than 5,000 kJ/kg, combustion becomes unstable, and thus combustion can be stabilized by supplying the oxygen-containing gas having a high oxygen concentration and performing combustion. In a case of the raw material having 5,000 kJ/kg or more, since the raw material is easily combusted by air, air may be supplied or an oxygen-containing gas may be supplied. That is, the oxygen-containing gas may be supplied to all of the raw materials or some of the raw materials according to a supply ratio of the raw materials.

As described above, by distributing the oxygen-containing gas for each raw material, the combustion of the raw materials can be efficiently performed.

In addition, preferably, in the dilute sulfuric acid generating step, a concentration of the dilute sulfuric acid is adjusted by controlling a temperature of a circulating sulfuric acid aqueous solution up and down.

In the dilute sulfuric acid generating step, a concentration of the dilute sulfuric acid to be generated can be adjusted by controlling the temperature of the circulating sulfuric acid aqueous solution up and down. Therefore, for example, when the water in the desulfurization waste liquid is 50 wt.%, the temperature of the dilute sulfuric acid is increased to around 80°C, and thereby the dilute sulfuric acid worth as a trading product having around 70 wt.% can be generated.

In addition, preferably, the method for manufacturing dilute sulfuric acid further includes a sulfuric acid concentrating step of concentrating dilute sulfuric acid generated in the dilute sulfuric acid generating step to have a concentration 70 to 80 wt.%.

As described above, by concentrating the dilute sulfuric acid generated in the dilute sulfuric acid generating step to have the concentration of 70 to 80 wt.%, the dilute sulfuric acid having the concentration of 70% or more worth as a trading product can be generated, and the dilute sulfuric acid having the concentration of 70% or more (preferably around 75%) which can cope with corrosion resistance in a product line made of carbon steel can be generated.

In addition, preferably, in the dilute sulfuric acid generating step, the reaction gas is cooled with direct contact using a generated sulfuric acid aqueous solution, without including equipment for indirectly cooling the reaction gas.

As described above, by directly cooling the reaction gas with the part of the generated sulfuric acid aqueous solution in the dilute sulfuric acid generating step, there is no need to provide a special indirect cooling device in the dilute sulfuric acid generating step.

In addition, preferably, in the cooling step, a exhaust heat boiler including a boiler being used, and the exhaust heat boiler includes a water supply step of supplying water into the boiler and a heat exchanging step of evaporating the water with the combustion gas to generate steam and cooling the combustion gas by heat exchange.

In this case, preferably, an outlet temperature regulating step of providing a boiler bypass and an adjustment valve for making an outlet temperature of the boiler constant with respect to a variation in the outlet temperature is further provided.

As described above, by using the exhaust heat boiler in the cooling step and keeping the temperature of a boiler outlet constant, it is possible to prevent the temperature of the outlet of the boiler from varying due to a change of the raw material and contamination of a boiler water pipe and to supply a reactive gas having a constant temperature in the reaction step.

In addition, preferably, in the dilute sulfuric acid generating step, a water amount of the raw material is adjusted to adjust a concentration of the dilute sulfuric acid generated in the dilute sulfuric acid generating step without adding water from the combustion step to the dilute sulfuric acid generating step.

As described above, by preparing the water amount of the raw material, the concentration of dilute sulfuric acid can be adjusted without adding water.

Advantageous Effects of Invention

According to the present invention, it is possible to provide a dilute sulfuric acid manufacturing method for manufacturing dilute sulfuric acid capable of inexpensively manufacturing dilute sulfuric acid.

Brief Description of Drawings

Fig. 1 is a schematic diagram illustrating an upstream step of a dilute sulfuric acid manufacturing apparatus
Fig. 2 is a schematic diagram illustrating a downstream step of the dilute sulfuric acid manufacturing apparatus
Fig. 3 is a schematic diagram illustrating an internal structure of combustion means (combustion furnace)
Fig. 4 is a graph illustrating a result of a simulation of the combustion furnace 51.
Fig. 5 is a schematic diagram illustrating an internal structure of a converter 61.
Fig. 6 is a schematic diagram illustrating an internal structure of an embodiment of the combustion means (combustion furnace)
Fig. 7 is a system diagram of equipment used in examples.
Fig. 8 is a diagram illustrating a result of an example.
Fig. 9 is a diagram illustrating a result of another example.
Fig. 10 is a diagram illustrating a result of still another example.
Fig. 11 is a diagram illustrating a result of still another example.
Fig. 12 is a diagram illustrating a result of still another example.
Fig. 13 is a diagram illustrating a result of still another example.
Fig. 14 is a diagram illustrating a result of still another example.
Fig. 15 is a graph summarizing results of the examples.
Fig. 16 is a graph summarizing results of the examples.
Fig. 17 is a graph summarizing results of the examples.
Fig. 18 is a graph summarizing results of the examples.
Fig. 19 is a graph illustrating the corrosiveness of carbon steel to sulfuric acid.

Description of Embodiments

Hereinafter, configurations of embodiments of the present invention will be described.

1. Dilute sulfuric acid manufacturing apparatus and method for manufacturing dilute sulfuric acid

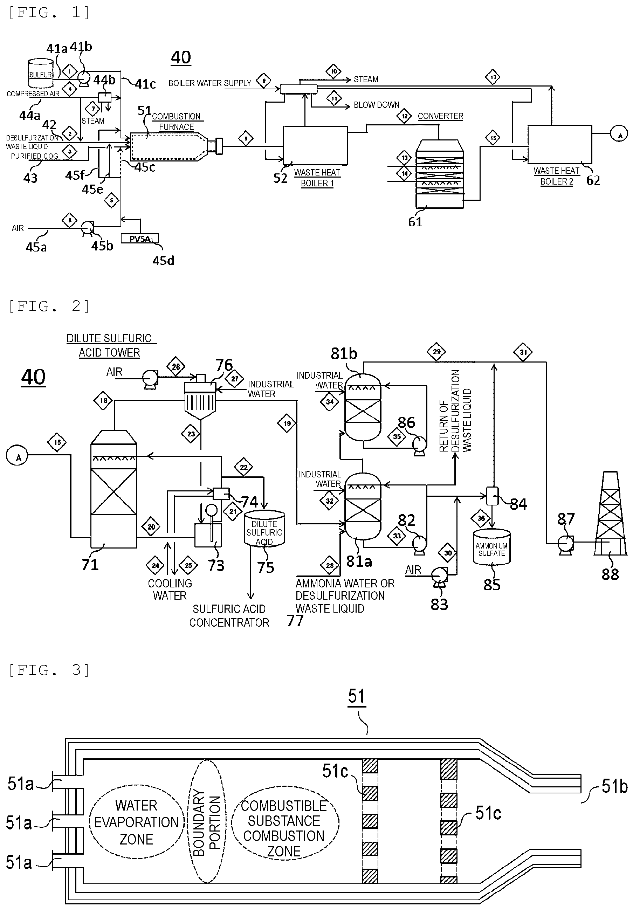

Hereinafter, a dilute sulfuric acid manufacturing apparatus and a method for manufacturing dilute sulfuric acid according to the embodiments of the present invention will be described with reference to Figs. 1 to 3, whereby the apparatus does not form part of the invention.

Fig. 1 is a schematic diagram illustrating an upstream step of a dilute sulfuric acid manufacturing apparatus 40. Fig. 1 is a schematic view illustrating a case where an oxygen-containing gas is supplied to a raw material (here, desulfurization waste liquid/molten sulfur). For the purified COG, an oxygen-containing gas may be supplied, and air may be supplied.

Fig. 2 is a schematic view illustrating a downstream step of the dilute sulfuric acid manufacturing apparatus 40. Further, the "dilute sulfuric acid" of the present invention is a sulfuric acid aqueous solution having a sulfuric acid concentration of less than 90 wt.% and includes "thin sulfuric acid" (sulfuric acid content of 60 to 80 wt.%) and "purified dilute sulfuric acid" (sulfuric acid content of 27 to 50 wt.%) as defined in JIS K1321.

As illustrated in Fig. 1, the dilute sulfuric acid manufacturing apparatus 40 includes means for supplying a raw material. The raw material of this embodiment includes molten sulfur, a desulfurization waste liquid, and purified COG as a combustion improver. Raw material supply means is means for supplying these raw materials to a combustion furnace 51. The dilute sulfuric acid manufacturing apparatus 40 includes a pipeline 41a for supplying molten sulfur as a raw material. The molten sulfur is sulfur which is collected from a refinery or the like and is brought into a molten state. A pump 41b is connected to the pipeline 41a, and thereby the raw material is transferred to a pipeline 41c and supplied into the combustion furnace 51.

In addition, the dilute sulfuric acid manufacturing apparatus 40 also includes a pipeline 42 for supplying a desulfurization waste liquid as a raw material. The desulfurization waste liquid is a waste liquid from desulfurization equipment installed for the purpose of removing soot and dust, an organic substance, a sulfur compound, and the like in an exhaust gas (crude COG) discharged from coke oven equipment and the like. In general, the desulfurization waste liquid contains components such as free sulfur, free $NH_3$, $NH_4SCN$, $(NH_4)_2S_2O_3$, and $H_2O$. Of the components, water ($H_2O$) is not particularly defined and often accounts for 50 wt.% or more of the entire desulfurization waste liquid. The pipeline 42 communicates with the combustion furnace 51, and the desulfurization waste liquid is also supplied into the combustion furnace 51 as a raw material.

Moreover, the dilute sulfuric acid manufacturing apparatus 40 includes a pipeline 43 for supplying the purified COG as a combustion improver. The purified COG is a gas generated in a process of producing coke used for ironmaking and the like. In general, purified COG includes components such as $H_2$, $N_2$, $O_2$, CO, $CO_2$, $CH_4$, C2H$_6$, and trace sulfur compounds. The pipeline 43 also communicates with the combustion furnace 51, and the purified COG is also supplied into the combustion furnace 51 as a combustion improver.

The pipeline 41a, the pump 41b, the pipeline 41c, the pipeline 42, and the pipeline 43 correspond to raw material and combustion improver supply means of the present invention, and these means realize a combustible raw material supply step. Consequently, of the raw materials (molten sulfur and desulfurization waste liquid) supplied to the combustion furnace 51, the desulfurization waste liquid contains a sulfur component (10 to 40 wt.%) such as $(NH_4)_2S_2O_3$, a nitrogen component (5 to 25 wt.%) such as $NH_3$, and water component (40 to 80 wt.%), in addition to a simple sulfur substance. As in this embodiment, when there are a plurality of kinds of raw materials (for example, in this embodiment, two kinds of molten sulfur and desulfurization waste liquid), the water content is defined as an amount obtained by mixing the raw materials and the water in the combustion improver.

A pipeline 44a for supplying compressed air as a spray medium is connected to the pipeline 41c and the pipeline 42. A steam heater 44b is provided at the pipeline 44a, and heated air is supplied to the pipeline 41c to perform fine atomization for enhancing combustion efficiency of these raw materials. In addition, the dilute sulfuric acid manufacturing apparatus 40 includes a pipeline 45a for supplying air. The air supplied from the pipeline 45a is transferred to a pipeline 45c via the blower 45b.

In Fig. 1, an oxygen gas generator (PVSA 45d: vacuum type pressure swing adsorption method) is provided at the pipeline 45c, and oxygen having a high concentration is supplied from the PVSA 45d. The PVSA 45d is a device that efficiently obtains high-purity oxygen by adsorbing and removing nitrogen in air under pressure using an adsorbent such as zeolite. The PVSA 45d can generate oxygen having a purity of 90 vol.% or more. This oxygen is mixed with the air in the pipeline 45a and supplied into the combustion furnace 51 as air having a high oxygen concentration. For the oxygen gas generator 45d, a PSA method (pressure swing adsorption method) may be used. In addition, alternatively, oxygen may be supplied by forming a branch from an existing oxygen gas pipe. Here, a pipeline 45e was used for the oxygen-containing gas to the desulfurization waste liquid, and a pipeline 45f was used for the oxygen-containing gas to the molten sulfur.

The pipeline 45a, the blower 45b, the PVSA 45d, the pipeline 45c, the pipeline 45e, and the pipeline 45f correspond to the oxygen-containing gas generating means of the present invention, and an oxygen-containing gas generation step is realized by these means. The pipeline 45c is represented by a dotted line because the pipeline 45c may be used for air instead of the oxygen-containing gas. Consequently, the oxygen-containing gas supplied to the combustion furnace 51 is thereby adjusted to have an oxygen concentration of 22 to 40 vol.%, preferably 22 to 30 vol.%, and more preferably 25 to 30 vol.%.

The combustion furnace 51 (combustion means) performs a combustion step of combusting the raw material with the oxygen-containing gas to generate a combustion gas containing sulfur oxide (SOx) and 10 vol.% or more of a water. Fig. 3 is a schematic diagram illustrating an internal structure of the combustion furnace 51. As illustrated in this figure, a supply port 51a through which the raw material and the oxygen-containing gas are supplied is provided upstream of the combustion furnace 51, the raw material is combusted inside, and the combustion gas is discharged from a downstream discharge port 51b. In this embodiment, the molten sulfur is supplied from the upper supply port 51a in the drawing, the desulfurization waste liquid is supplied from the middle supply port 51a, and the purified COG is supplied from the lower supply port 51a. Further, in addition to an aspect in which the raw material is supplied from a separate supply port for each kind of raw material as in this embodiment, the raw materials may be supplied to the combustion furnace 51 in a state where some or all of the raw materials are mixed in advance.

There is a water evaporation zone on a raw material supply side of the combustion furnace 51, and here, the combustion of the molten sulfur and the purified COG and the water evaporation in the desulfurization waste liquid are mainly performed. Then, a combustible substance in the desulfurization waste liquid is combusted in the combustible substance combustion zone. A boundary portion is formed between the zones. A lattice brick 51c is provided between the combustible substance combustion zone and the discharge port 51b. The lattice brick 51c is formed by arranging cubic heat-resistant bricks in a lattice shape and in a partially open state. An opening ratio of the lattice brick 51c is preferably about 50%. The lattice brick 51c is often provided in a plurality of stages.

In the combustion furnace 51, it is more preferable that the oxygen concentration of the oxygen-containing gas to be introduced be in a range of 22 to 40 vol.%, and preferably 22 to 30 vol.%, the oxygen concentration in the combustion gas generated in the combustion furnace 51 be in a range of 2.0 to 7.0 vol.%, and an $SO_3$ conversion rate in the combustion gas generated in the combustion furnace 51 be in a range of 1.0 to 3.0%. The $SO_3$ conversion rate is represented by the following expression.

$$SO_3 \text{ conversion rate} = (SO_3/SOx) \times 100$$

(Here, $SO_3$ represents a volume concentration of $SO_3$ contained in the combustion gas, and SOx represents a volume concentration of SOx contained in the combustion gas.)

The lattice brick 51c provided downstream of the combustible substance combustion zone enables the following functions to be fulfilled in addition to a reduction of radiation to the devices positioned downstream. The lattice brick 51c has a function of physically promoting re-mixing of the air and a combustible substance so that the combustible substance does not cause a blow-by phenomenon in an uncombusted state even when the air and the combustible substance come into an incomplete mixed state in the combustible substance combustion zone, and the lattice brick 51c has a function of promoting re-combustion by retained heat of the brick. For this purpose, it is preferable to install the lattice bricks 51c in a plurality of stages. In addition, respective stage openings of the plurality of stages of the lattice bricks 51c are formed in a zigzag arrangement. Consequently, since dust in the gas adheres to and grows on a brick surface and falls down, it is preferable that the plurality of stages of lattice bricks 51c be arranged to accumulate the falling dust without providing an opening at the lowermost portion.

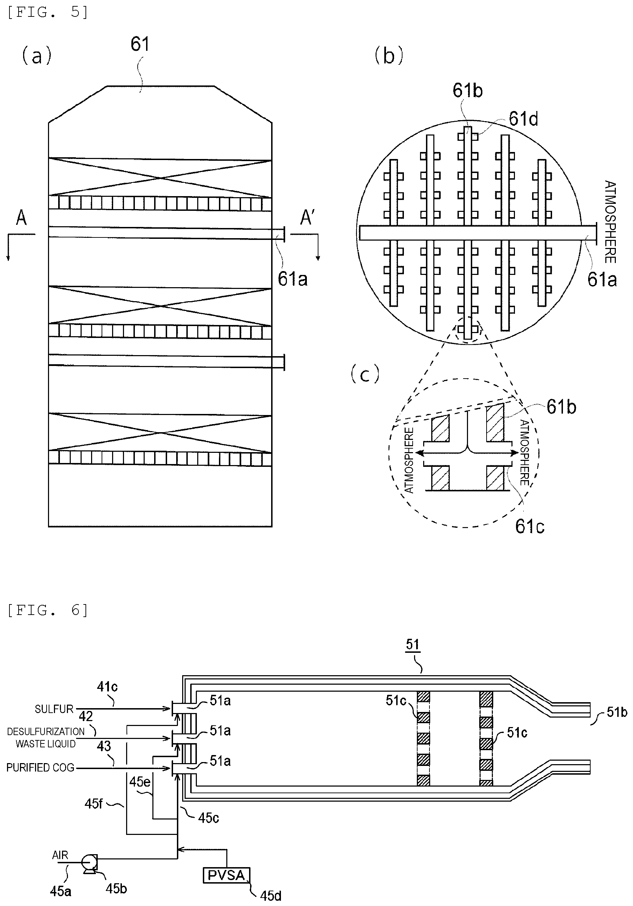

Fig. 6 is a schematic diagram of an example of an embodiment of means for supplying the oxygen-containing gas to the combustion furnace 51. As illustrated in this figure, of the raw materials to be combusted, a burner at the sulfur supply port 51a includes means for supplying the oxygen-containing gas from the pipeline 45f, and a burner at the desulfurization waste liquid supply port 51a includes means for supplying the oxygen-containing gas from the pipeline 45e. In a path for supplying the purified COG to the combustion furnace 51, as illustrated in the figure, means for supplying the oxygen-containing gas from the pipeline 45c is provided to the burner of the supply port 51a of the purified COG. Since a calorific value of the desulfurization waste liquid is usually as low as less than 5,000 kJ/kg, it is difficult to combust the desulfurization waste liquid; however, the combustion is promoted by supplying the oxygen-containing gas containing 22 to 40 vol.% of oxygen to the burner. On the other hand, only air may be supplied to a raw material having a high calorific value such as the molten sulfur. Similarly, only air may be supplied to the purified COG. It is preferable that both be independently subjected to combustion control.

A combustion temperature at which the raw material is combusted in the combustion furnace 51 is preferably in a range of 900 to 1,100°C. The upper limit of the combustion temperature is preferably 1,050°C or lower. In order to reduce the amount of NOx in the combustion gas, the combustion temperature is preferably low and is, for example, 1,025°C or lower, more preferably 100°C or lower. This is because the NOx concentration increases as the combustion temperature increases as illustrated in Fig. 15 to be described below.

In the combustion furnace 51, since the raw material is combusted with the oxygen-containing gas having an oxygen concentration of 22 to 40 vol.%, the amount of NOx contained in the combustion gas to be generated can be reduced as compared with a case where the raw material is combusted under the same condition by using normal air (oxygen concentration of 21 vol.%). For example, when the amount of NOx contained in the combustion gas when the raw material is combusted with the oxygen-containing gas having the oxygen concentration of 22 to 40 vol.% is denoted by $NOx_{(rich)}$, and the amount of NOx contained in the combustion gas when the same raw material is combusted under the same conditions that air having an oxygen concentration of 21 vol.% is used is denoted by $NOx_{(air)}$, an NOx decreasing rate represented by the following expression can be set to 50 to 95%.

$$NOx \text{ decreasing rate}: NOx_{(rich)}/NOx_{(air)} \times 100 \ (\%)$$

The NOx decreasing rate tends to decrease as the oxygen concentration increases, and the NOx decreasing rate can be about 80% at an oxygen concentration of 25 vol.% and about 60% at an oxygen concentration of 30 vol.%.

The combustion gas generated in the combustion furnace 51 is transferred to a exhaust heat boiler 52 (WHB) (cooling means). The exhaust heat boiler (1) 52 performs a cooling step of supplying chemical-adjusted water into the boiler, evaporating the water with the combustion gas to generate steam, and cooling the combustion gas by heat exchange. Consequently, the temperature of the combustion gas is cooled to 380 to 460°C, preferably about 420°C.

The exhaust heat boiler (1) 52 includes a boiler and the combustion gas is cooled in the boiler. The exhaust heat boiler (1) 52 includes water supply means (water supply step) for supplying water into the boiler, and heat exchange means (heat exchange step) for evaporating water from the water supply means with the combustion gas to generate steam and cooling the combustion gas by heat exchange. Moreover, the exhaust heat boiler (1) 52 according to this embodiment further includes outlet temperature regulating means (outlet temperature regulating step) for adjusting an outlet temperature of the converter 61 in the boiler to a temperature suitable for the converter 61 to generate a reaction gas, and constant temperature maintaining means (constant temperature maintaining step) that includes a boiler bypass and an adjustment valve for making the outlet temperature constant with respect to a change in the outlet temperature of the boiler. The outlet temperature regulating means includes a bypass duct of the boiler and a bypass gas amount adjusting valve. The outlet temperature regulating means regulates a high-temperature bypass gas amount and mixes the bypass gas amount with a low-temperature gas at the outlet of the boiler to obtain a combustion gas having a predetermined temperature. Further, the exhaust heat boiler (1) 52 may include recycling means (recycling step) for collecting the steam generated by the heat exchange means and reusing the steam as water of the water supply means.

The combustion gas cooled in the exhaust heat boiler (1) 52 is introduced into the converter 61 (reaction means). The combustion gas cooled in the exhaust heat boiler (1) 52 contains a trace amount of nitrogen component (for example, undecomposed $NH_3$ or NOx such as NO or $NO_2$). The converter 61 performs a reaction for generating a reaction gas containing sulfur trioxide ($SO_3$) by reacting sulfur dioxide ($SO_2$) in the combustion gas with oxygen to oxidize the sulfur dioxide ($SO_2$) using catalysts installed in a plurality of stages (three stages in the drawing) (reaction step). More specifically, the converter 61 converts sulfur dioxide into sulfur trioxide ($SO_3$) with high efficiency by a technique of directly mixing the atmosphere drawn from the outside with the converted gas which is increased in temperature by oxidation (exothermic reaction) of sulfur oxide (SOx) and oxygen by the catalyst in an early stage of the plurality of stages and lowering the temperature to a temperature suitable for the catalytic reaction in the later stage.

Fig. 5 is a schematic diagram illustrating an internal structure of the converter 61, in which Fig. 5(a) is a side view, Fig. 5(b) is a cross-sectional view taken along line A-A', and Fig. 5(c) is an enlarged view of a part surrounded by a broken line circle of Fig. 5(b). As illustrated in this figure, the converter 61 includes a main air pipe 61a that takes in air of the atmosphere, a branch air pipe 61b that branches in the converter from the main air pipe 61a, and an air port 61d that feeds air into the converter from the branch air pipe 61b.

As the catalyst, a known catalyst used for manufacturing sulfuric acid can be used, and examples thereof can include vanadium pentoxide ($V_2O_5$). Vanadium pentoxide has a denitration function and forms nitrogen ($N_2$) and water ($H_2O$) by causing $NH_3$ to react with NOx. Therefore, this catalyst can simultaneously generate sulfur trioxide and decompose nitrogen components ($NH_3$ and NOx). At this time, $NH_3$ may be injected for denitration. Since 60 to 80% of sulfur dioxide ($SO_2$) is subjected to an oxidation reaction in a first stage of the converter 61, a gas temperature after the reaction is about 500 to 600°C, preferably about 540°C. The remaining sulfur dioxide ($SO_2$) oxidatively reacts with sulfur trioxide ($SO_3$) in a second stage and a third stage of the converter 61, and an inlet temperature of each stage is preferably set to 410 to 440°C, and the temperature is adjusted by directly mixing the atmosphere with the early stage outlet gas.

Further, a denitrification catalyst may be disposed upstream of the first stage of the converter 61 (inflow side of the combustion gas from the exhaust heat boiler (1) 52). As the denitrification catalyst, a catalyst obtained by mixing vanadium pentoxide with a co-catalyst can be used. Examples of the co-catalyst include titanium oxide ($TiO_2$) and the like, or a mixture thereof. In the conversion of the sulfur oxide, by providing a denitration catalyst containing the above-described co-catalyst, a reaction of decomposition of the nitrogen component proceeds more preferentially than the conversion of the sulfur oxide, and the nitrogen component is decomposed. Then, at the later stage of the denitration catalyst, the sulfur oxide can be efficiently converted in a state of being hardly affected by the nitrogen component by the vanadium pentoxide not containing the co-catalyst.

In addition, the converter 61 can both include indirect cooling means (not illustrated) that indirectly cools the converted gas by heat exchange and use direct cooling. The term "indirect cooling" means, for example, cooling without direct contact of a refrigerant with the converted gas positioned downstream of the first-stage, unlike the above-described method in which the atmosphere drawn from the outside is mixed with the converted gas to directly cool the converted gas. The indirect cooling means is a device that performs a step of performing indirect cooling (indirect cooling step). As the indirect cooling means, from the viewpoint of preventing the heat transfer surface from reaching the acid dew poin, a heat exchanger, a boiler, or the like using steam on the low temperature side is preferably provided.

The reaction gas generated by the converter 61 is transferred to a exhaust heat boiler (2) 62 and cooled. As the exhaust heat boiler (2) 62, a device similar to the exhaust heat boiler (1) 52 can be used. In the exhaust heat boiler (2) 62, the reaction gas is cooled to about 280 to 300°C which is a temperature obtained by avoiding a sulfuric acid dew point of about 250°C. Further, the exhaust heat boiler (2) 62 is recommended to be installed from the viewpoint of effective use of energy. However, the exhaust heat boiler (2) 62 is not an indispensable device in the present invention, and can be arbitrarily installed.

Next, as illustrated in Fig. 2, the reaction gas cooled by the exhaust heat boiler (2) 62 is transferred to a bottom portion of the dilute sulfuric acid tower 71 (dilute sulfuric acid generating means) in which the dilute sulfuric acid generating step is performed. The dilute sulfuric acid tower 71 is a device that absorbs $H_2O$ and $SO_3$ in the reaction gas into a circulating sulfuric acid aqueous solution (dilute sulfuric acid) to produce dilute sulfuric acid of a product, and is also called an absorption tower. The inside of the dilute sulfuric acid tower 71 is filled with a packing material, and a sulfuric acid aqueous solution is sprayed toward the packing material from the upper part of the tower, and the reaction gas comes into contact with the sulfuric acid aqueous solution when passing between the packing materials, and thereby $H_2O$ and $SO_3$ are absorbed by the sulfuric acid aqueous solution.

The sulfuric acid aqueous solution having absorbed $SO_3$ is transferred to a tank 73 (dilute sulfuric acid generating means), cooled by cooling water from a cooling tower (not illustrated) by a heat exchanger 74 (dilute sulfuric acid generating means), and then stored in a tank 75 as a final product. In the tank 75, a temperature of the sulfuric acid aqueous solution is lowered to about 50 to 60°C.

In addition, the sulfuric acid aqueous solution stored in the tank 75 as a final product often has the sulfuric acid concentration in a range of 50 to 70 wt.% depending on the raw material containing the sulfuric acid component, the nitrogen component, and 40 to 80 wt.% or more of a water component. In this embodiment, it is also possible to increase the sulfuric acid concentration to 70 wt.% or more in order to provide a value as a trading product to dilute sulfuric acid as a final product. The heat exchanger 74 (temperature control means) of this embodiment can control the temperature of the circulating sulfuric acid aqueous solution from the dilute sulfuric acid tower 71 up and down. In order to increase the sulfuric acid concentration of the final product, a degree of cooling in the heat exchanger 74 is loosened, and the temperature of the sulfuric acid aqueous solution sprayed from an upper part of the dilute sulfuric acid tower 71 is increased from about 50 to 60°C to about 80 to 100°C, and preferably about 80°C. Consequently, an increase in amount of water in the outlet gas of the dilute sulfuric acid tower 71 can be increased, and the sulfuric acid concentration of the sulfuric acid aqueous solution stored in the tank 75 can be increased to 70 wt.% or more. In addition, the temperature of the sulfuric acid aqueous solution inevitably increases to 80 to 100°C in the tank 75.

On the other hand, by increasing the temperature of the circulating sulfuric acid aqueous solution in the heat exchanger 74, corrosion becomes a problem. The aqueous sulfuric acid solution increases in corrosiveness as the temperature increases. Therefore, when the temperature of the circulating sulfuric acid aqueous solution is increased, an expensive material (for example, lead, Hastelloy B2, Teflon (registered trademark) lining, and the like) having high corrosion resistance to sulfuric acid is required for portions of the dilute sulfuric acid tower 71, the heat exchanger 74, the tank 73, the tank 75, piping, and the like that come into contact with the sulfuric acid aqueous solution. Consequently, this leads to an increase in cost of the equipment.

Therefore, in this embodiment, it is also possible to provide a sulfuric acid concentrator (sulfuric acid concentrating means) for concentrating the sulfuric acid aqueous solution stored in the tank 75. In the sulfuric acid concentrator, sulfuric acid contained in the sulfuric acid aqueous solution can be concentrated to increase the concentration (sulfuric acid concentrating step). Examples of the sulfuric acid concentrator can include a device that evaporates and concentrates water contained in the sulfuric acid aqueous solution by heating or the like. As described above, by providing the sulfuric acid concentrator, the sulfuric acid aqueous solution having a low concentration of 50 to 70 wt.% in the tank 75 can be converted into the sulfuric acid aqueous solution having a high concentration of 70 wt.% or more in the sulfuric acid concentrator. Consequently, when sulfuric acid aqueous solution having the concentration of 50 to 70 wt.% can be obtained in the tank 75 without increasing the temperature of the sulfuric acid aqueous solution circulating in the dilute sulfuric acid tower 71, the heat exchanger 74, or the like, a commercially available sulfuric acid aqueous solution having a sulfuric acid concentration of 70 wt.% or more can be obtained in the subsequent sulfuric acid concentrator. Hence, an expensive material having high corrosion resistance to sulfuric acid is not used for equipment such as the dilute sulfuric acid tower 71 and the heat exchanger 74, or a small scale (capacity) is sufficient even if used, and thus there is an advantage that the cost of the facilities can be reduced.

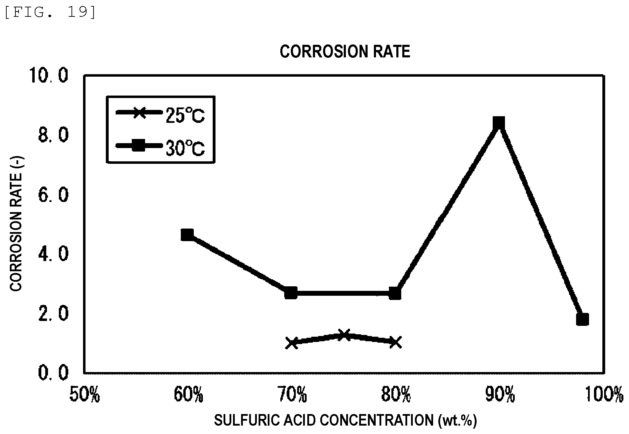

In addition, carbon steel is also used in a variety of product lines, but has a problem that it is vulnerable to corrosion to sulfuric acid, and therefore corrodes immediately upon contact with the sulfuric acid having a high concentration and a high temperature. Fig. 19 is a diagram illustrating the corrosiveness of sulfuric acid with respect to carbon steel (SS400 material). The horizontal axis represents a sulfuric acid concentration (wt.%), and a vertical axis represents a corrosion rate. From this figure, it is found that the corrosion of carbon steel is reduced around a sulfuric acid concentration of 70 to 80 wt.%, and the corrosion rate is significantly reduced by lowering the temperature. That is, carbon steel can be applied by lowering the temperature of the product sulfuric acid having a concentration of 70 to 80 wt.% by any of the above methods.

A gas containing sulfuric acid mist, unreacted $SO_2$, and the like is discharged from a tower top portion of the dilute sulfuric acid tower 71. The sulfuric acid mist of the exhaust gas is collected by a wet electrostatic precipitator 76 or a mist eliminator, transferred to the tank 73, and reused as the sulfuric acid aqueous solution, and the rest of the exhaust gas is transferred to a detoxification tower 81a (gas removing means) that performs a gas removing step.

The exhaust gas from the wet electrostatic precipitator 76 or the mist eliminator is transferred to a bottom portion of the detoxification tower 81a and comes into contact with ammonia water similarly introduced from the bottom portion of the detoxification tower. Unreacted $SO_2$ in the exhaust gas reacts with ammonia to produce ammonium sulfite $((NH_4)_2SO_3)$. Most of the waste liquid containing ammonium sulfite is circulated and returns to the detoxification tower 81a by a pump 82, and a part thereof is air-oxidized with oxidizing air from a blower 83 via an in-line mixer or the like, and transferred to a tank 85 as ammonium sulfate $((NH_4)_2SO_4)$ via a gas-liquid separator 84. The gas and the accompanying

**EP 4 292 980 B1**

mist from the detoxification tower 81a are washed with the circulating liquid of a detoxification tower 81b by a pump 86, and the gas is discharged from the detoxification tower 81b. The detoxified exhaust gas does not contain $SO_2$ and contains only $N_2$, $O_2$, $CO_2$, and NOx within the regulation value.

Further, as an absorption neutralizing agent for treatment of unreacted sulfur dioxide (SO2) gas (smoke exhaust desulfurization), a desulfurization waste liquid can be used to cause ammonia contained in the desulfurization waste liquid to react with sulfur dioxide. In this case, the desulfurization waste liquid obtained after absorption of SO2 is removed from the pipeline 89 and returns to the pipeline 42 ("return of desulfurization waste liquid" in the drawing), and thereby the desulfurization waste liquid can be recycled as the raw material. Consequently, the desulfurization waste liquid can be effectively used.

The exhaust gas is sucked/pressurized by a blower 87 and discharged to the atmosphere through a chimney 88. The blower 87 has a function of setting all the individual devices of the dilute sulfuric acid manufacturing apparatus 40 to a negative pressure. Consequently, this prevents a harmful gas having a high temperature from flowing out to the atmosphere. In addition, the converter 61 also has a function of drawing air in the atmosphere without including special equipment. As described above, dilute sulfuric acid manufacturing and exhaust gas treatment are performed.

In the dilute sulfuric acid manufacturing method for manufacturing dilute sulfuric acid of this embodiment, it is possible to produce dilute sulfuric acid having a concentration of less than 90 wt.% only with water contained in the raw material without adding water (including water vapor) to the produced combustion gas, reaction gas, and sulfuric acid aqueous solution at least from the combustion means (combustion furnace 51) to the dilute sulfuric acid tower 71 (dilute sulfuric acid generating means). Therefore, there is no need to provide the water supply equipment required for manufacturing the dilute sulfuric acid, and the costs of manufacturing the dilute sulfuric acid can be reduced.

2. Simulation

(1) Simulation of entire dilute sulfuric acid manufacturing apparatus

Regarding the dilute sulfuric acid manufacturing apparatus 40 of Figs. 1 and 2, simulation was performed using an electrolyte simulator "OLI Flowsheet: ESP" (OLI systems Inc.), a general-purpose process simulator PRO/II™ (AVEVA Group plc), and calculation software, based on setting values illustrated in Table 1.

Regarding each device in the drawing, the values in the following table were used as the setting values for material balance.

[Table 1]

| | | | |
|---|---|---|---|
| Air temperature | | °C | 20 |
| Desulfurization waste liquid | Temperature | °C | 70 |
| | Flow rate | kg/h | 2,000 |
| Molten sulfur | Temperature | °C | 140 |
| | Flow rate | kg/h | 585 |
| Purified COG | Temperature | °C | 30 |
| | Flow rate | Nm3/h | 40.0 |
| Air ratio | | - | 1.30 |
| Oxygen gas | Concentration | % | 90 |
| | Flow rate | Nm3/h | 276 |
| Furnace outlet | Exhaust gas temperature | °C | 997 |
| WHB1 | Exhaust gas temperature | °C | 410 |
| Converter | Conversion rate | % | 95 |
| WHB2 | Exhaust gas temperature | °C | 280 |
| Dilute sulfuric acid tower | Exhaust gas temperature | °C | 50 |
| Dilute sulfuric acid | Concentration | wt% | 67.4 |

(continued)

| Air temperature | | °C | 20 |
|---|---|---|---|
| Detoxification tower | Exhaust gas temperature | °C | 40 |
| | Ammonia concentration | wt% | 25 |
| | Ammonium sulfate concentration | wt% | 30 |

Regarding the desulfurization waste liquid and the COG as the raw materials, the values in the following table were used as setting values of components.

[Table 2]

| Components of desulfurization waste liquid | |
|---|---|
| | Wt. % |
| Free-S | 3.2 |
| Free-$NH_3$ | 0.4 |
| $NH_4SCN$ | 28 |
| $(NH_4)_2S2O_3$ | 7.9 |
| $(NH_4)_2SO_4$ | 10.3 |
| $H_2O$ | 50.2 |
| Total | 100 |

[Table 3]

| Components of purified COG | |
|---|---|
| | Vol.% |
| H2 | 52.7 |
| N2 | 8.3 |
| O2 | 0.5 |
| CO | 8.6 |
| CO2 | 3.1 |
| CH4 | 24.3 |
| C2H6 | 2.4 |
| Total | 100 |

The results of the above simulation are illustrated in the following table. The "items" row in the table indicates a numerical value surrounded by a rhombus in Figs. 1 and 2, and the lower rows indicate results of a temperature, a component, or the like at the position of the item.

From this result, it was found that the final concentration of the dilute sulfuric acid was 67.4 wt.% (item 22). In addition, the same simulation was performed for the dilute sulfuric acid manufacturing apparatus 40 in which the PVSA 45d was not provided and the oxygen concentration of the air introduced into the combustion furnace 51 was the same as that of the atmosphere. As a result, the combustion exhaust gas discharged from the combustion furnace 51 (item 6) and the exhaust gas discharged to the chimney 88 (item 31) were 7,829 $Nm^3$/h (the following table) and 10,951 $Nm^3$/h (the following table), respectively, when the PVSA 45d was provided. On the other hand, the above items were 10,365 $Nm^3$/h and 13,207 $Nm^3$/h, respectively, when the PVSA 45d was not provided. In this respect, it was found that the amount of exhaust gas can be reduced by about 25% by increasing the oxygen concentration of the oxygen-containing gas to 25 vol.% by the PVSA 45d as in the present invention. As a result, for example, in the case of the converter 61, since a required amount of catalyst is calculated under a substantially constant condition that the reciprocal of the time during which the gas comes into contact with a catalyst layer per unit time, that is, a space velocity SV (unit of 1/hr), the required amount of catalyst can be reduced by 25% by reducing the gas amount by 25%.

[Table 4]

| Items | | 1 | 2 | 3 | 4 | 5 | 6 | 12 | 15 |
|---|---|---|---|---|---|---|---|---|---|
| Temperature | °C | 140 | 70 | 0 | 20 | 20 | 997 | 410 | 428 |
| Flow (Liquid) | | | | | | | | | |
| Total S | kg/h | 585 | 418 | 0 | 0 | 0 | 0 | 0 | 0 |
| H2O | kg/h | 0 | 1.004 | 0 | 0 | 0 | 0 | 0 | 0 |
| H2SO4 | kg/h | 0 | 0 | 0 | 0 | 0 | 0 | 0 | 0 |
| NH3 | kg/h | 0 | 0 | 0 | 0 | 0 | 0 | 0 | 0 |
| (NH4)2SO4 | kg/h | 0 | 0 | 0 | 0 | 0 | 0 | 0 | 0 |
| Total | kg/h | 585 | 2.000 | 0 | 0 | 0 | 0 | 0 | 0 |
| Flow (Vapor) | | | | | | | | | |
| $SO_2$ | Nm3/h | 0 | 0 | 0 | 0 | 0 | 682 | 682 | 33 |
| SO3 | Nm3/h | 0 | 0 | 0 | 0 | 0 | 20 | 20 | 669 |
| O2 | Nm3/h | 0 | 0 | 0 | 231 | 1.191 | 325 | 325 | 1.014 |
| H2O | Nm3/h | 0 | 0 | 0 | 0 | 73 | 1.947 | 1.947 | 2.025 |
| Total | Nm3/h | 327 | 1.708 | 0 | 1.098 | 4.838 | 7.829 | 7.829 | 12.409 |

[Table 5]

| Items | | 16 | 18 | 19 | 22 | 28 | 31 | 36 |
|---|---|---|---|---|---|---|---|---|
| Temperature | °C | 280 | 50 | 48 | 50 | 20 | 40 | 52 |
| Flow (Liquid) | | | | | | | | |
| Total S | kg/h | 0 | 0 | 0 | 956 | 0 | 0 | 0 |
| H2O | kg/h | 0 | 0 | 0 | 1.418 | 150 | 0 | 453 |
| H2SO4 | kg/h | 0 | 0 | 0 | 2.927 | 0 | 0 | 0 |
| NH3 | kg/h | 0 | 0 | 0 | 0 | 50 | 0 | 0 |
| (NH4)2SO4 | kg/h | 0 | 0 | 0 | 0 | 0 | 0 | 194 |
| Total | kg/h | 0 | 0 | 0 | 4.345 | 200 | 0 | 647 |
| Flow (Vapor) | | | | | | | | |
| SO2 | Nm3/h | 33 | 33 | 33 | 0 | 0 | 0 | 0 |
| SO3 | Nm3/h | 669 | 7 | 0 | 0 | 0 | 0 | 0 |
| O2 | Nm3/h | 1.014 | 1.014 | 1.138 | 0 | 0 | 1.173 | 0 |
| H2O | Nm3/h | 2.025 | 111 | 114 | 0 | 0 | 399 | 0 |
| Total | Nm3/h | 12.409 | 9.832 | 10.419 | 3 | 0 | 10.951 | 0 |

(2) Simulation of combustion furnace 51

Simulation was performed on the combustion furnace 51 of Fig. 3 using chemical reaction simulation software "CHEMKIN" (ANSYS, Inc.). The conditions are as follows.

<Calculation Conditions>

· All liquid materials are replaced by gases.

· The chemical species containing S are replaced by $N_2$ as an inert substance.
· The inside of the combustion furnace is a plug flow current.
· Heat generation associated with combustion is not considered.
· Analysis was performed with and without the PVSA.

The components at the inlet of the combustion furnace 51 were set to the values in the following table.

[Table 6]

| | | | |
|---|---|---|---|
| Liquid | S | ·kmol/h | 18.8 |
| | Free-$NH_3$ | kmol/h | 5.9 |
| | $NH_4SCN$ | kmol/h | 10.5 |
| | $(NH_4)_2S2O_3$ | kmol/h | 2.7 |
| | $H_2O$ | kmol/h | 138.9 |
| Vapor | $SO_2$ | kmol/h | 0.0 |
| | $SO_3$ | kmol/h | 0.0 |
| | $H_2$ | kmol/h | 0.2 |
| | $N_2$ | kmol/h | 186.6 |
| | $O_2$ | kmol/h | 72.4 |
| | $CH_4$ | kmol/h | 0.1 |
| | $CO_2$ | kmol/h | 0.0 |
| | $H_2O$ | kmol/h | 3.7 |
| | $NH_3$ | kmol/h | 0.0 |

Regarding the above components, the following numerical values were set as simulation input values.

[Table 7]

| | | |
|---|---|---|
| $H_2$ | kmol/h | 0.2 |
| $N_2$ | kmol/h | 208.0 |
| $O_2$ | kmol/h | 72.4 |
| $CH_4$ | kmol/h | 0.1 |
| $CO_2$ | kmol/h | 0.0 |
| $H_2O$ | kmol/h | 142.6 |
| $NH_3$ | kmol/h | 32.3 |
| total | kmol/h | 455.7 |

As calculation conditions of the combustion furnace 51, the following numerical values were set.

[Table 8]

| Case | Inlet flow rate [kmol/h] | Temperature [°C] | Inlet H2 mass Fraction | Inlet O2 mass Fraction | Inlet H2O mass Fraction | Inlet CH4 mass Fraction | Inlet CO2 mass Fraction | Inlet NH3 mass Fraction | Inlet N2 mass Fraction |
|---|---|---|---|---|---|---|---|---|---|
| with PVSA | 455.7 | 980 | 0.000041 | 0.205 | 0.228 | 0.000195 | 0 | 0.0489 | 0.517 |
| without PVSA | 780.6 | 980 | 0.00166 | 0.169 | 0.13371 | 0.00672 | 0.00190 | 0.0276 | 0.659 |

The results (graph) of the simulation are illustrated in Fig. 4. The case without the PVSA was compared with the case with the PVSA with an NO generation amount at the furnace outlet set to 1. As indicated by NO in this figure, it can be found that the amount of NOx generation is smaller in the case with the PVSA. In the case without the PVSA, it was found that NOx was generated by combustion of COG gases ($CH_4$, $H_2$, and CO) on the combustion furnace inlet side. The reason why the amount of NOx generation is lower with the PVSA is presumed to be that the generation of NOx derived from the COG gases is suppressed in the case with the PVSA.

Examples

Hereinafter, the present invention will be specifically described with reference to Examples. However, the examples do not limit the object of the present invention. These examples have been carried out mainly for the purpose of demonstrating the combustion characteristics of the raw material by the oxygen-containing gas, which is a main point of the present patent, and experiments on the configurations of the raw material supply means, the oxygen-containing gas generating means, and the combustion means of the present invention were carried out using actual equipment. Further, in the following examples, correspondence relationships with the terms of the present invention are as follows.

(Terms of the present invention: Terms in examples)

· Raw material (desulfurization waste liquid): Combustion liquid
· COG: COG (also described as coke oven gas)
· Oxygen-containing gas: oxygen-enriched air
· Combustion gas: exhaust gas (also referred to as combustion exhaust gas)
· Combustion means: furnace (also described as a cylindrical furnace, a combustion furnace, and the like.)
· Molten sulfur is not used as the raw material.

1. Experimental overview in experimental furnace

A cylindrical furnace was used to perform combustion experiments.

(1) System diagram

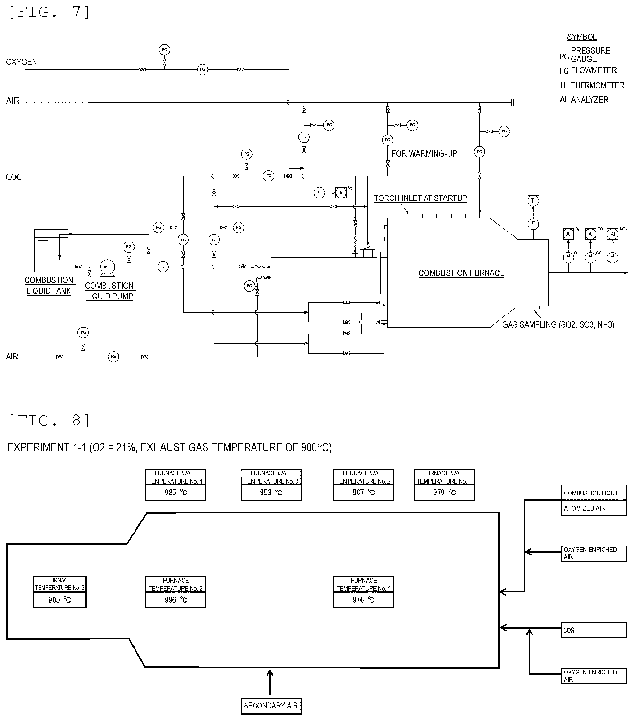

A system diagram of the equipment used in this test is illustrated in Fig. 7.

(2) Raw material specifications

The specifications of the combustion liquid and the COG were as follows.

[Table 9]

| Combustion liquid (desulfurization waste liquid) | |
| --- | --- |
| Temperature | Normal temperature |
| Components (wt.%) | |
| S | 3.2 |
| NH3 | 0.4 |
| NH4SCN | 28 |
| (NH4)2S2O3 | 7.9 |
| (NH4)2SO4 | 10.3 |
| H2O | 50.2 |
| Total | 100 |

[Table 10]

| COG | |
|---|---|
| Temperature | 30°C |
| Components (dry vol.%) | |
| H2 | 52.7 |
| N2 | 8.3 |
| O2 | 0.5 |
| CO | 8.6 |
| CO2 | 3.1 |
| CH4 | 24.3 |
| C2H6 | 2.4 |
| Total | 100 |

(3) Main equipment specification

The main devices are as follows.

[Table 11]

| No. | Device name |
|---|---|
| 1 | Combustion furnace |
| 2 | Combustion liquid burner |
| 3 | COG burner (for warming-up, auxiliary combusting sub-burner) |
| 4 | Combustion liquid pump |
| 5 | Combustion liquid tank |

(4) Regarding exhaust gas analysis

The exhaust gas analysis items are as follows.

[Table 12]

| Measurement target | Analysis instrument/analysis method |
|---|---|
| $NO_x$ | Continuous analysis |
| $O_2$ | Continuous analysis |
| CO | Continuous analysis |
| $NH_3$ | Neutralization titration |
| $SO_2$ | Neutralization titration |
| $SO_3$ | Neutralization titration |

(5) Experimental Overview

The operating conditions for each experiment are as described.
The experiment described in Examples is a case where the oxygen concentration in the oxygen-containing gas is changed, and Comparative Example shows a case where air is supplied. Further, in the following table, the oxygen concentration indicates the oxygen concentration in the primary combustion air, and the exhaust gas temperature indicates a target value.

[Table 13]

| Experiment No. | Oxygen concentration | Exhaust gas temperature |
|---|---|---|
| Experiment 1-1 | 21% | 900°C |
| Experiment 1-2 | 21% | 950°C |
| Experiment 1-3 | 21% | 1000°C |
| Experiment 2-1 | 25% | 950°C |
| Experiment 2-2 | 25% | 100°C |
| Experiment 3-1 | 30% | 900°C |
| Experiment 3-2 | 30% | 950°C |

1) Warm-up operation

At a cold start, a warm-up operation is performed by a COG single firing operation.

2) Experiment

A combustion experiment was performed under different operating conditions in accordance with "(5) Outline of Experiment" above described. Specifically, after it was confirmed that the inside of the furnace was sufficiently warmed up by the COG single firing, the combustion liquid was gradually supplied, and for molten sulfur planned in the actual machine, COG corresponding to the amount of generated heat was supplied. After setting the operating conditions, the exhaust gas composition was measured by an automatic analyzer and gas sampling/neutralization titration analysis.

2. Experimental results

(1) Experimental result list

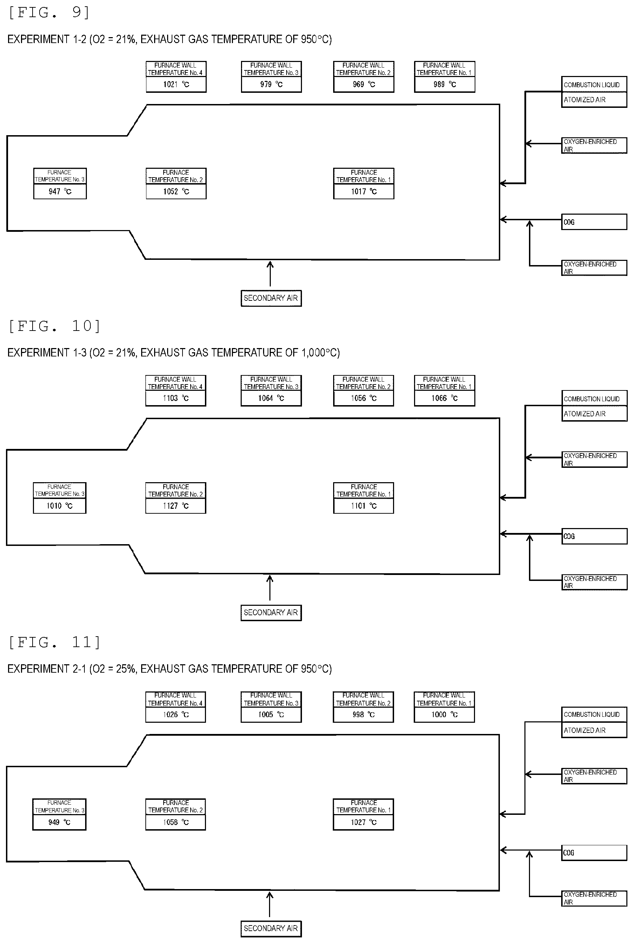

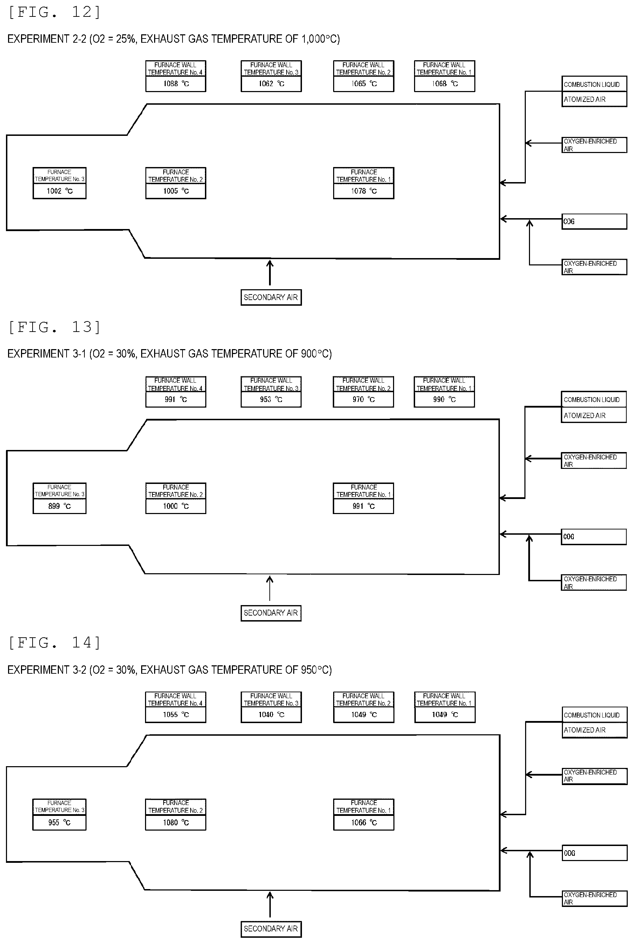

The experimental results are illustrated in Table 14. Further, through this test, it is assumed that the oxygen concentration of the exhaust gas did not match the calculated value although the raw material was completely combusted, and air was leaked due to aging of the furnace, and the amount of combustion air was corrected so that the oxygen concentration measurement value of the exhaust gas was matched with the input oxygen, and the experimental results were organized. In addition, Figs. 8 to 14 illustrate temperature distributions in the furnace.

(2) Summary of experimental results

The experimental results are summarized as follows. Further, furnace temperature No. 3 in Figs. 8 to 14 was employed as the combustion exhaust gas temperature.

[Table 14]

(a) Experimental result without oxygen enrichment (O2 = 21%)

| | Experiment 1-1 905°C | Experiment 1-2 947°C | Experiment 1-3 1010°C |
|---|---|---|---|
| Combustion temperature | | | |
| Exhaust gas amount (Wet) | 314 Nm$^3$/h | 464 Nm$^3$/h | 417 Nm$^3$/h |
| SO3 conversion rate (%) | 2.3%/2.4% | 2.9%/2.5% | 1.6%/2.8% |
| NOx Concentration (O2 = 12% conversion) | 0.05 | - | 0.24 |

(b) Experimental result with oxygen enrichment (O2 = 25%)

| Combustion temperature | Experiment 2-1 949°C | Experiment 2-2 1002°C |
|---|---|---|
| Exhaust gas amount (Wet) | 408 Nm$^3$/h | 330 Nm$^3$/h |
| SO3 conversion rate (%) | 2.2%/2.3% | -/2.1% |

(continued)

| Combustion temperature | Experiment 2-1 949°C | Experiment 2-2 1002°C |
|---|---|---|
| NOx Concentration (O2 = 12% conversion) | 0.20 | 0.24 |

(c) Experimental result without oxygen enrichment (O2 = 30%)

| Combustion temperature | Experiment 3-1 900°C | Experiment 3-2 955°C |
|---|---|---|
| Exhaust gas amount (Wet) | 342 Nm$^3$/h | 352 Nm$^3$/h |
| SO3 conversion rate (%) | 3.8%/2.9% | - |
| NOx Concentration (O2 = 12% conversion) | 0.09 | 0.18 |

Note: NOx concentration (02 = 12% conversion) represents a ratio of measured value to environmental regulation value

(3) Results of ammonia analysis of exhaust gas

It was confirmed that the analytical value was smaller than a lower limit of a quantitative of the titration method, and the ammonia concentration was 1 ppm or less (detection limit or less). Further, the exhaust gas temperature condition was confirmed at 900°C, which is considered to be the most severe condition in terms of ammonia combustion.

3. Evaluation of results

(1) Evaluation of amount of $NO_x$ generation

The NOx concentration in the exhaust gas is as illustrated in Tables 14(a), 14(b), and 14(c). As illustrated in Fig. 15, it was confirmed that the $NO_x$ value increases as the exhaust gas temperature increases, but $NO_x$ is sufficiently lower than the environmental regulation value in any result.
Reduction of NOx amount by oxygen enrichment (Fig. 16)

· At 1,000°C and 950°C, a decrease in the amount of NOx generation due to oxygen enrichment is observed. This result is also consistent with the simulation.

This is presumed to be due to a COG reduction by oxygen enrichment.

· At 900°C, the original amount of NOx generation was small, and no significant difference due to the oxygen concentration was observed.

(2) Evaluation of $SO_3$ conversion rate

The conversion from $SO_2$ to $SO_3$ is generally discussed in the following oxidation reaction expression (exotherm) and chemical equilibrium expression.

[Math. 1]

$$SO_2 + \frac{1}{2}O_2 = SO_3 + \Delta H \qquad \text{Expression 1}$$

$$K_p = \frac{pSO_3}{pSO_2 \times pO_2^{1/2}} \qquad \text{Expression 2}$$

$$\log K_p = \frac{5186.5}{T} + 0.611 \log T - 6.747 \qquad \text{Expression 3}$$

Kp: Chemical equilibrium constant
pX: Partial pressure of each component X

These expressions represent the following two points.

1) The higher the temperature, the lower the $SO_3/SO_2$ ratio.
2) The $SO_3/SO_2$ ratio increases as the oxygen concentration increases.

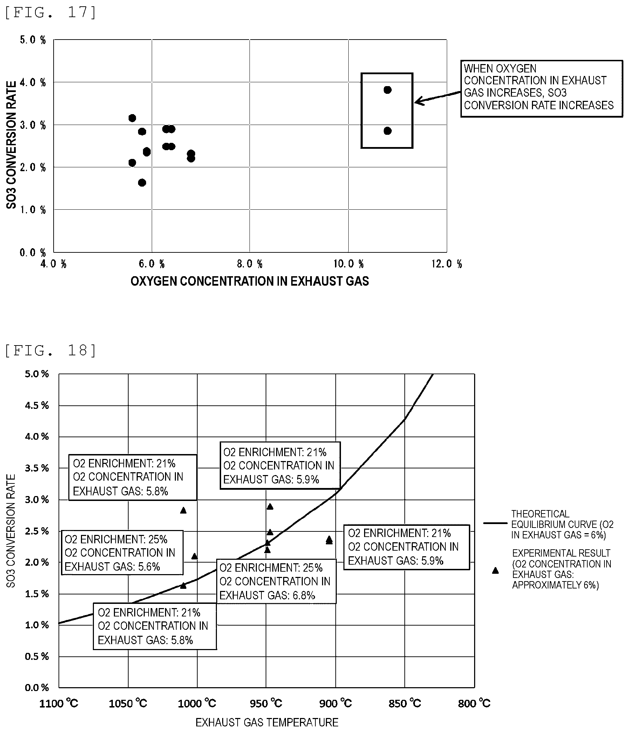

First, the $SO_3$ conversion rate tends to decrease as the exhaust gas temperature increases, and this is described by the above expression 1. On the other hand, Fig. 17 illustrates the experimental results organized by the oxygen concentration of the exhaust gas regardless of the oxygen enrichment rate. From this figure, the $SO_3$ conversion rate increases as the oxygen concentration of the exhaust gas increases, which is explained by the above two equations.

According to the experimental results, it is considered that the temperature and the oxygen concentration of the exhaust gas in a region in the latter half of the combustion furnace affect the conversion rate of $SO_3$ rather than the oxygen partial pressure in the combustion zone. That is, the oxygen enrichment rate does not affect the $SO_3$ conversion rate, and the temperature and the oxygen concentration of the exhaust gas at the furnace outlet affect the $SO_3$ conversion rate. As described above, it was confirmed that it was appropriate to evaluate the $SO_3$ conversion rate not only in the combustion zone but also in the exhaust gas at the furnace outlet.

Further, the $SO_3$ conversion rate is represented by the following expression.

$$SO_3 \text{ conversion rate} = (SO_3/SOx) \times 100$$

(Here, $SO_3$ represents a volume concentration of $SO_3$ contained in the exhaust gas, and SOx represents a volume concentration of SOx contained in the exhaust gas.)

As the chemical equilibrium constant (Kp), the equation of Bodenstein and Pohl has been proposed, and the experimental results were evaluated using this equation. Regarding the partial pressure of each gas component obtained in the experiment, it was found that the measured value and the value obtained by Equation 3 were substantially matched by correcting the exhaust gas temperature of Equation 3 described above. Fig. 18 illustrates the measured value near the oxygen concentration of 6% and the equilibrium curve in Equation 3.

(3) Ammonia Evaluation

Ammonia in the exhaust gas was not detected, and it was confirmed that the desulfurization waste liquid was completely combusted and the ammonia concentration was lower than the environmental regulation value.

4. Summary

1) Reduction in amount of combustion exhaust gas by oxygen enrichment

· Also in the experiment, the effect of reducing the amount of exhaust gas by oxygen enrichment was confirmed.

2) Reduction of NOx amount by oxygen enrichment

· In the oxygen-enriched combustion, it was confirmed that the NOx concentration was set to a low value satisfying the environmental regulation value.
· At 1,000°C and 950°C, a decrease in the amount of NOx generation due to oxygen enrichment is observed. This result is also consistent with the simulation.

3) Ammonia concentration

· In the oxygen-enriched combustion, it was confirmed that the ammonia concentration was set to a low value which satisfies the environmental regulation value.

4) $SO_3$ conversion rate by oxygen enrichment

· It was confirmed that the oxygen enrichment did not affect the $SO_3$ conversion rate in the exhaust gas at the furnace outlet. The effect of the oxygen concentration in the exhaust gas on the $SO_3$ conversion rate was confirmed.

· By adjusting the oxygen concentration in the exhaust gas, the $SO_3$ conversion rate can be made equivalent to that at the time of air combustion while reducing the exhaust gas flow rate by oxygen enrichment.

Table 15 illustrates the relationship between oxygen enrichment at an exhaust gas temperature of 950°C and the amount of exhaust gas (Wet). As illustrated in this table, it was confirmed that the exhaust gas amount can be reduced as the oxygen enrichment rate is increased. In the actual equipment, it is expected that the exhaust gas flow rate can be reduced by about 30%.

[Table 15]

Reduction effect of exhaust gas amount by oxygen enrichment

| | Experiment 1-2 | Experiment 2-1 | Experiment 3-2 |
|---|---|---|---|
| Oxygen enrichment rate | $O_2$ = 21% | $O_2$ = 25% | $O_2$ = 30% |
| Exhaust gas amount (Wet) | 264 $Nm^3$/h | 408 $Nm^3$/h | 352 $Nm^3$/ h |
| Oxygen enrichment rate | - | -12% | -24% |

Reference Signs List

40    Dilute sulfuric acid manufacturing apparatus
41a   Pipeline (raw material supply means)
41b   Pump (raw material supply means)
41c   Pipeline (raw material supply means)
42    Pipeline (raw material supply means)
43    Pipeline (raw material supply means)
44a   Pipeline (oxygen gas-containing gas generating means)
44b   Steam heater (oxygen gas-containing gas generating means)
45a   Pipeline (oxygen-containing gas generating means)
45b   Blower (oxygen-containing gas generating means)
45c   Pipeline (oxygen-containing gas generating means)
45d   PVSA (oxygen-containing gas generating means)
45e   Pipeline
51    Combustion furnace (combustion means)
51a   Supply port
51b   Discharge port
51c   Lattice brick
52    exhaust heat boiler (1) (cooling means)
61    Converter (reaction means)
61a   Main air pipe
61b   Branch air pipe
61c   Air port
62    exhaust heat boiler (2)
71    Dilute sulfuric acid tower (dilute sulfuric acid generating means)
73    Tank (dilute sulfuric acid generating means)
74    Heat exchanger (dilute sulfuric acid generating means)
75    Tank
76    Wet electrostatic precipitator
81a   Detoxification tower (gas removing means)
81b   Detoxification tower (gas removing means)
82    Pump
83    Blower
84    Gas-liquid separator
85    Tank

# EP 4 292 980 B1

86      Pump
87      Blower
88      Chimney

**Claims**

1. A method for manufacturing dilute sulfuric acid, comprising:

   a raw material supply step of supplying a raw material containing at least a sulfur component, a nitrogen component, and 40 to 80 wt.% or more of a water component;
   an oxygen-containing gas generating step of generating an oxygen-containing gas having an oxygen concentration of 22 to 40 vol.%;
   a combustion step of combusting the raw material with the oxygen-containing gas to generate a combustion gas containing sulfur oxide (SOx: here, $1 \leq x < 3$) and 10 vol.% or more of a water component;
   a cooling step of cooling the combustion gas;
   a reaction step of oxidizing the sulfur oxide (SOx) with a catalyst to generate a reaction gas containing sulfur trioxide ($SO_3$); and
   a dilute sulfuric acid generating step of cooling the reaction gas to generate dilute sulfuric acid.

2. The method for manufacturing dilute sulfuric acid according to claim 1, wherein the raw material is combusted by using the oxygen-containing gas having an oxygen concentration of 22 to 40 vol.% generated in the oxygen-containing gas generating step, whereby an amount of nitrogen oxide in the combustion gas generated by the combustion step is made smaller than an amount of nitrogen oxide in a combustion gas generated on assumption that the raw material is combusted under the same condition by using air having an oxygen concentration of 21 vol.%.

3. The method for manufacturing dilute sulfuric acid according to claim 1, wherein no denitrating equipment is provided at least between the combustion step and the reaction step.

4. The method for manufacturing dilute sulfuric acid according to claim 1, wherein in the combustion step, the raw material is combusted at a temperature of 900 to 1,100°C.

5. The method for manufacturing dilute sulfuric acid according to claim 1, wherein

   in the combustion step,
   the oxygen-containing gas introduced in the oxygen-containing gas generating step has an oxygen concentration within a range of 22 to 30 vol.%, and
   the combustion gas generated in the combustion step has an oxygen concentration within a range of 2.0 to 7.0 vol.%.

6. The method for manufacturing dilute sulfuric acid according to claim 1, further comprising: a gas removing step of removing unreacted sulfur dioxide in the dilute sulfuric acid generating step.

7. The method for manufacturing dilute sulfuric acid according to claim 1, wherein in the combustion step, a combustion furnace (51) including a partially open lattice brick (51c) inside is used.

8. The method for manufacturing dilute sulfuric acid according to claim 1, wherein in the reaction step, a denitration function is also fulfilled with vanadium pentoxide ($V_2O_5$) as the catalyst.

9. The method for manufacturing dilute sulfuric acid according to claim 1, wherein in the reaction step, the catalyst is provided in a plurality of stages, and a temperature of a converted gas is lowered without depending on a heat exchanger (74) by directly mixing atmosphere drawn from outside with the converted gas heated by an exothermic reaction due to the oxidation of the sulfur oxide by the catalyst in an early stage of the plurality of stages and lowering the temperature to a temperature suitable for a catalytic reaction in a later stage.

10. The method for manufacturing dilute sulfuric acid according to claim 1, wherein in the combustion step, the oxygen-containing gas is supplied to a raw material having less than 5,000 kJ/kg to cause combustion, and in a case where a raw material having 5,000 kJ/kg or more and a combustion improver are supplied, air is supplied to the combustion improver to cause combustion.

24

11. The method for manufacturing dilute sulfuric acid according to claim 1, wherein in the combustion step, the oxygen-containing gas is supplied to a raw material having less than 5,000 kJ/kg to cause combustion and, in a case of a small amount of the raw material having less than 5,000 kJ/kg, the oxygen-containing gas is supplied to cause combustion even with a raw material having 5,000 kJ/kg or more or a combustion improver.

12. The method for manufacturing dilute sulfuric acid according to claim 1, wherein in the dilute sulfuric acid generating step, a concentration of the dilute sulfuric acid is adjusted by controlling a temperature of a sulfuric acid aqueous solution up and down.

13. The method for manufacturing dilute sulfuric acid according to claim 1, further comprising: a sulfuric acid concentrating step of concentrating dilute sulfuric acid generated in the dilute sulfuric acid generating step to have a concentration 70 to 80 wt.%.

14. The method for manufacturing dilute sulfuric acid according to claim 1, wherein in the dilute sulfuric acid generating step, the reaction gas is cooled with direct contact using a generated sulfuric acid aqueous solution, without including equipment for indirectly cooling the reaction gas.

15. The method for manufacturing dilute sulfuric acid according to claim 1, wherein

in the cooling step, a exhaust heat boiler (52) including a boiler is used, and
the exhaust heat boiler (52) includes
a water supply step of supplying water into the boiler, and
a heat exchanging step of evaporating the water with the combustion gas to generate steam and cooling the combustion gas by heat exchange.

16. The method for manufacturing dilute sulfuric acid according to claim 1, wherein in the dilute sulfuric acid generating step, a water amount of the raw material is adjusted to adjust a concentration of the dilute sulfuric acid generated in the dilute sulfuric acid generating step without adding water from the combustion step to the dilute sulfuric acid generating step.


**Patentansprüche**

1. Verfahren zum Herstellen von verdünnter Schwefelsäure, welches umfasst:

einen Rohmaterialzufuhrschritt zum Zuführen eines Rohstoffs, der mindestens eine Schwefelkomponente, eine Stickstoffkomponente und 40 bis 80 Gew-% oder mehr einer Wasserkomponente enthält,
einen ein sauerstoffhaltiges Gas erzeugenden Schritt zum Erzeugen eines sauerstoffhaltigen Gases mit einer Sauerstoffkonzentration von 22 bis 40 Vol.-%,
einen Verbrennungsschritt zum Verbrennen des Rohmaterials mit dem sauerstoffhaltigen Gas, um ein Verbrennungsgas zu erzeugen, welches Schwefeloxid (SOx: hier $1 \leq x < 3$) und 10 Vol.-% oder mehr einer Wasserkomponente enthält,
einen Kühlschritt zum Kühlen des Verbrennungsgases,
einen Reaktionsschritt zum Oxidieren des Schwefeloxids (SOx) mit einem Katalysator, um ein Reaktionsgas zu erzeugen, welches Schwefeltrioxid ($SO_3$) enthält, und
einen Schritt zum Erzeugen von verdünnter Schwefelsäure durch Kühlen des Reaktionsgases, um verdünnte Schwefelsäure zu erzeugen.

2. Verfahren zum Herstellen von verdünnter Schwefelsäure gemäß Anspruch 1, wobei das Rohmaterial durch Verwenden des sauerstoffhaltigen Gases mit einer Sauerstoffkonzentration von 22 bis 40 Vol.-%, das im Schritt zum Erzeugen von sauerstoffhaltigem Gas erzeugt wird, verbrannt wird, wodurch eine Menge an Stickoxid im Verbrennungsgas, das durch den Verbrennungsschritt erzeugt wird, kleiner gemacht wird als eine Menge an Stickoxid in einem Verbrennungsgas, das unter der Annahme erzeugt wird, dass das Rohmaterial unter den gleichen Bedingungen durch Verwenden von Luft mit einer Sauerstoffkonzentration von 21 Vol.-% verbrannt wird.

3. Verfahren zum Herstellen von verdünnter Schwefelsäure gemäß Anspruch 1, wobei zumindest zwischen dem Verbrennungsschritt und dem Reaktionsschritt keine Denitriervorrichtung bereitgestellt wird.

4. Verfahren zum Herstellen von verdünnter Schwefelsäure gemäß Anspruch 1, wobei im Verbrennungsschritt das Rohmaterial bei einer Temperatur von 900 bis 1.100 °C verbrannt wird.

5. Verfahren zum Herstellen von verdünnter Schwefelsäure gemäß Anspruch 1, wobei

im Verbrennungsschritt
das im Schritt des Erzeugens von sauerstoffhaltigem Gas eingeführte sauerstoffhaltige Gas eine Sauerstoffkonzentration einem Bereich von 22 bis 30 Vol.-% aufweist und
das im Verbrennungsschritt erzeugte Verbrennungsgas eine Sauerstoffkonzentration im Bereich von 2,0 bis 7,0 Vol.-% aufweist.

6. Verfahren zum Herstellen von verdünnter Schwefelsäure gemäß Anspruch 1, ferner umfassend: einen Gasentfernungsschritt des Entfernens von im Schritt des Erzeugens von verdünnter Schwefelsäure nicht umgesetztem Schwefeldioxid.

7. Verfahren zum Herstellen von verdünnter Schwefelsäure gemäß Anspruch 1, wobei im Verbrennungsschritt ein Verbrennungsofen (51) verwendet wird, der im Inneren einen teilweise offenen Gitterziegel (51c) enthält.

8. Verfahren zum Herstellen von verdünnter Schwefelsäure gemäß Anspruch 1, wobei im Reaktionsschritt auch eine Denitrierungsfunktion mit Vanadiumpentoxid ($V_2O_5$) als Katalysator erfüllt wird.

9. Verfahren zum Herstellen von verdünnter Schwefelsäure gemäß Anspruch 1, wobei im Reaktionsschritt der Katalysator in einer Vielzahl von Stufen bereitgestellt wird und eine Temperatur eines umgewandelten Gases gesenkt wird, ohne von einem Wärmetauscher (74) abhängig zu sein, indem von außen angesaugte Atmosphäre direkt mit dem umgewandelten Gas gemischt wird, welches durch eine exotherme Reaktion aufgrund der Oxidation des Schwefeloxids durch den Katalysator in einer frühen Stufe der Vielzahl von Stufen erhitzt wurde, und die Temperatur in einer späteren Stufe auf eine für eine katalytische Reaktion geeignete Temperatur gesenkt wird.

10. Verfahren zum Herstellen von verdünnter Schwefelsäure gemäß Anspruch 1, wobei im Verbrennungsschritt das sauerstoffhaltige Gas einem Rohmaterial mit weniger als 5.000 kJ/kg zugeführt wird, um eine Verbrennung zu bewirken, und in einem Fall, in dem ein Rohmaterial mit 5.000 kJ/kg oder mehr und ein Verbrennungsverbesserer zugeführt werden, dem Verbrennungsverbesserer Luft zugeführt wird, um eine Verbrennung zu bewirken.

11. Verfahren zum Herstellen von verdünnter Schwefelsäure gemäß Anspruch 1, wobei im Verbrennungsschritt das sauerstoffhaltige Gas einem Rohmaterial mit weniger als 5.000 kJ/kg zugeführt wird, um eine Verbrennung zu bewirken, und in einem Fall einer geringen Menge des Rohmaterials mit weniger als 5.000 kJ/kg das sauerstoffhaltige Gas zugeführt wird, um auch bei einem Rohmaterial mit 5.000 kJ/kg oder mehr oder einem Verbrennungsverbesserer eine Verbrennung zu bewirken.

12. Verfahren zum Herstellen von verdünnter Schwefelsäure gemäß Anspruch 1, wobei im Schritt zum Erzeugen von verdünnter Schwefelsäure eine Konzentration der verdünnten Schwefelsäure durch Auf- und Abregulieren einer Temperatur einer wässrigen Schwefelsäurelösung eingestellt wird.

13. Verfahren zum Herstellen von verdünnter Schwefelsäure gemäß Anspruch 1, ferner umfassend: einen Schwefelsäurekonzentrationsschritt des Konzentrierens der im Schritt zum Erzeugen von verdünnter Schwefelsäure erzeugten verdünnten Schwefelsäure auf eine Konzentration von 70 bis 80 Gew.-%.

14. Verfahren zum Herstellen von verdünnter Schwefelsäure gemäß Anspruch 1, wobei im Schritt zum Erzeugen von verdünnter Schwefelsäure das Reaktionsgas durch direkten Kontakt unter Verwendung einer erzeugten wässrigen Schwefelsäurelösung gekühlt wird, ohne Einbeziehen einer Vorrichtung zum indirekten Kühlen des Reaktionsgases.

15. Verfahren zum Herstellen von verdünnter Schwefelsäure gemäß Anspruch 1, wobei

im Kühlschritt ein Abwärmekessel (52) einschließlich eines Kessels verwendet wird und
der Abwärmekessel (52) umfasst
einen Wasserversorgungsschritt zum Zuführen von Wasser in den Kessel und
einen Wärmeaustauschschritt zum Verdampfen des Wassers mit dem Verbrennungsgas, um Dampf zu erzeugen, und zum Kühlen des Verbrennungsgases durch Wärmeaustausch.

**16.** Verfahren zum Herstellen von verdünnter Schwefelsäure gemäß Anspruch 1, wobei im Schritt zum Erzeugen von verdünnter Schwefelsäure eine Wassermenge des Rohmaterials eingestellt wird, um eine Konzentration der im Schritt zum Erzeugen von verdünnter Schwefelsäure erzeugten verdünnten Schwefelsäure einzustellen, ohne Wasser aus dem Verbrennungsschritt in den Schritt zum Erzeugen von verdünnter Schwefelsäure zuzuführen.

**Revendications**

**1.** Procédé de fabrication d'acide sulfurique dilué, comprenant :

une étape d'alimentation en première première consistant en l'alimentation d'une matière première contenant au minimum un composant soufre, un composant azote, et 40 à 80 % en poids ou plus d'un composant eau ;
une étape de génération de gaz contenant de l'oxygène consistant en la génération d'un gaz contenant de l'oxygène ayant une concentration d'oxygène de 22 à 40 % en volume ;
une étape de combustion consistant en la combustion de la matière première avec le gaz contenant de l'oxygène pour générer un gaz de combustion contenant de l'oxyde de soufre (SOx : ici, $1 \leq x \leq 3$) et 10 % en volume ou plus d'un composant eau ;
une étape de refroidissement consistant en le refroidissement du gaz de combustion ;
une étape de réaction consistant en l'oxydation de l'oxyde de soufre (SOx) avec un catalyseur pour générer un gaz de réaction contenant du trioxyde de soufre ($SO_3$) ; et
une étape de génération d'acide sulfurique dilué consistant en le refroidissement du gaz de réaction pour générer de l'acide sulfurique dilué.

**2.** Procédé de fabrication d'acide sulfurique dilué selon la revendication 1, dans lequel la matière première subit une combustion à l'aide du gaz contenant de l'oxygène ayant une concentration d'oxygène de 22 à 40 % en volume généré à l'étape de génération de gaz contenant de l'oxygène, par lequel une quantité d'oxyde d'azote dans le gaz de combustion généré par l'étape de combustion est telle qu'elle est plus faible qu'une quantité d'oxyde d'azote dans un gaz de combustion généré en supposant que la matière première subit une combustion dans la même condition à l'aide d'un air ayant une concentration d'oxygène de 21 % en volume.

**3.** Procédé de fabrication d'acide sulfurique dilué selon la revendication 1, dans lequel aucun équipement de dénitration n'est fourni au moins entre l'étape de combustion et l'étape de réaction.

**4.** Procédé de fabrication d'acide sulfurique dilué selon la revendication 1, dans lequel à l'étape de combustion la matière première subit une combustion à une température de 900 à 1100 °C.

**5.** Procédé de fabrication d'acide sulfurique dilué selon la revendication 1, dans lequel

à l'étape de combustion,
le gaz contenant de l'oxygène introduit à l'étape de génération de gaz contenant de l'oxygène a une concentration d'oxygène dans une plage de 22 à 30 % en volume, et
le gaz de combustion généré à l'étape de combustion a une concentration d'oxygène dans une plage de 2,0 à 7,0 % en volume.

**6.** Procédé de fabrication d'acide sulfurique dilué selon la revendication 1, comprenant en outre : une étape d'élimination de gaz consistant en l'élimination du dioxyde de soufre n'ayant pas réagi à l'étape de génération d'acide sulfurique dilué.

**7.** Procédé de fabrication d'acide sulfurique dilué selon la revendication 1, dans lequel à l'étape de combustion, on utilise un four à combustion (51) renfermant une brique en treillis partiellement ouvert (51c) à l'intérieur.

**8.** Procédé de fabrication d'acide sulfurique dilué selon la revendication 1, dans lequel à l'étape de réaction, une fonction de dénitration est également remplie avec du pentoxyde de vanadium ($V_2O_5$) en tant que catalyseur.

**9.** Procédé de fabrication d'acide sulfurique dilué selon la revendication 1, dans lequel à l'étape de réaction, le catalyseur est fourni dans une pluralité d'étages, et la température d'un gaz converti est abaissée sans dépendre d'un échangeur thermique (74) en mélangeant directement l'atmosphère amenée de l'extérieur avec le gaz converti chauffé par une réaction exothermique due à l'oxydation de l'oxyde de soufre par le catalyseur dans un étage antérieur de la pluralité d'étages et en abaissant la température à une température convenant à une réaction catalytique dans un étage ultérieur.

10. Procédé de fabrication d'acide sulfurique dilué selon la revendication 1, dans lequel à l'étape de combustion, le gaz contenant de l'oxygène est alimenté vers une matière première ayant moins de 5000 kJ/kg pour provoquer une combustion, et dans un cas où une matière première ayant 5000 kJ/kg ou plus et un améliorateur de combustion sont alimentés, de l'air est alimenté vers l'améliorateur de combustion pour provoquer une combustion.

11. Procédé de fabrication d'acide sulfurique dilué selon la revendication 1, dans lequel à l'étape de combustion, le gaz contenant de l'oxygène est alimenté vers une matière première ayant moins de 5000 kJ/kg pour provoquer une combustion, et dans le cas d'une petite quantité de la matière première ayant moins de 5000 kJ/kg, le gaz contenant de l'oxygène est alimenté pour provoquer une combustion même avec une matière première ayant 5000 kJ/kg ou plus ou un améliorateur de combustion.

12. Procédé de fabrication d'acide sulfurique dilué selon la revendication 1, dans lequel à l'étape de génération d'acide sulfurique dilué, une concentration de l'acide sulfurique dilué est ajustée par régulation d'une température d'une solution aqueuse d'acide sulfurique à la hausse ou à la baisse.

13. Procédé de fabrication d'acide sulfurique dilué selon la revendication 1, comprenant en outre : une étape de concentration d'acide sulfurique consistant en la concentration de l'acide sulfurique dilué généré à l'étape de génération d'acide sulfurique dilué pour avoir une concentration de 70 à 80 % en poids.

14. Procédé de fabrication d'acide sulfurique dilué selon la revendication 1, dans lequel à l'étape de génération d'acide sulfurique dilué, le gaz de réaction est refroidi avec contact direct au moyen d'une solution aqueuse d'acide sulfurique générée, sans inclure d'équipement destiné au refroidissement indirect du gaz de réaction.

15. Procédé de fabrication d'acide sulfurique dilué selon la revendication 1, dans lequel

à l'étape de refroidissement, on utilise une chaudière de récupération de chaleur d'échappement (52) incluant une chaudière, et
la chaudière de récupération de chaleur d'échappement (52) inclut
une étape d'alimentation en eau consistant en l'alimentation d'eau dans la chaudière, et
une étape d'échange thermique consistant en l'évaporation de l'eau avec le gaz de combustion pour générer de la vapeur et le refroidissement du gaz de combustion par échange thermique.

16. Procédé de fabrication d'acide sulfurique dilué selon la revendication 1, dans lequel à l'étape de génération d'acide sulfurique dilué, une quantité d'eau de la matière première est ajustée pour ajuster une concentration de l'acide sulfurique dilué généré à l'étape de génération d'acide sulfurique dilué sans ajouter d'eau provenant de l'étape de combustion à l'étape de génération d'acide sulfurique dilué.

[FIG. 1]

[FIG. 2]

[FIG. 3]

[FIG. 4]

[FIG. 5]

(a)

61

A ← → A′

61a

(b)

61b

61d

ATMOSPHERE

61a

(c)

ATMOSPHERE

61b

ATMOSPHERE

61c

[FIG. 6]

51

41c

SULFUR

42

51a

51c

DESULFURIZATION
WASTE LIQUID

43

51a

51c

PURIFIED COG

51a

45e

45f

45c

AIR

51b

PVSA

45a    45b

45d

EP 4 292 980 B1

[FIG. 7]

[FIG. 8]

EXPERIMENT 1-1 (O2 = 21%, EXHAUST GAS TEMPERATURE OF 900°C)

32

[FIG. 9]

EXPERIMENT 1-2 (O2 = 21%, EXHAUST GAS TEMPERATURE OF 950°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 1021 ℃ | 979 ℃ | 969 ℃ | 989 ℃ |

COMBUSTION LIQUID

ATOMIZED AIR

OXYGEN-ENRICHED AIR

| FURNACE TEMPERATURE No. 3 | FURNACE TEMPERATURE No. 2 | FURNACE TEMPERATURE No. 1 |
|---|---|---|
| 947 ℃ | 1052 ℃ | 1017 ℃ |

COG

OXYGEN-ENRICHED AIR

SECONDARY AIR

[FIG. 10]

EXPERIMENT 1-3 (O2 = 21%, EXHAUST GAS TEMPERATURE OF 1,000°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 1103 ℃ | 1064 ℃ | 1056 ℃ | 1066 ℃ |

COMBUSTION LIQUID

ATOMIZED AIR

OXYGEN-ENRICHED AIR

| FURNACE TEMPERATURE No. 3 | FURNACE TEMPERATURE No. 2 | FURNACE TEMPERATURE No. 1 |
|---|---|---|
| 1010 ℃ | 1127 ℃ | 1101 ℃ |

COG

OXYGEN-ENRICHED AIR

SECONDARY AIR

[FIG. 11]

EXPERIMENT 2-1 (O2 = 25%, EXHAUST GAS TEMPERATURE OF 950°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 1026 ℃ | 1005 ℃ | 998 ℃ | 1000 ℃ |

COMBUSTION LIQUID

ATOMIZED AIR

OXYGEN-ENRICHED AIR

| FURNACE TEMPERATURE No. 3 | FURNACE TEMPERATURE No. 2 | FURNACE TEMPERATURE No. 1 |
|---|---|---|
| 949 ℃ | 1058 ℃ | 1027 ℃ |

COG

OXYGEN-ENRICHED AIR

SECONDARY AIR

[FIG. 12]

EXPERIMENT 2-2 (O2 = 25%, EXHAUST GAS TEMPERATURE OF 1,000°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 1088 °C | 1062 °C | 1065 °C | 1068 °C |

COMBUSTION LIQUID

ATOMIZED AIR

OXYGEN-ENRICHED AIR

| FURNACE TEMPERATURE No. 3 | FURNACE TEMPERATURE No. 2 | | FURNACE TEMPERATURE No. 1 |
|---|---|---|---|
| 1002 °C | 1005 °C | | 1078 °C |

COG

OXYGEN-ENRICHED AIR

SECONDARY AIR

[FIG. 13]

EXPERIMENT 3-1 (O2 = 30%, EXHAUST GAS TEMPERATURE OF 900°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 991 °C | 953 °C | 970 °C | 990 °C |

COMBUSTION LIQUID

ATOMIZED AIR

OXYGEN-ENRICHED AIR

| FURNACE TEMPERATURE No. 3 | FURNACE TEMPERATURE No. 2 | | FURNACE TEMPERATURE No. 1 |
|---|---|---|---|
| 899 °C | 1000 °C | | 991 °C |

COG

OXYGEN-ENRICHED AIR

SECONDARY AIR

[FIG. 14]

EXPERIMENT 3-2 (O2 = 30%, EXHAUST GAS TEMPERATURE OF 950°C)

| FURNACE WALL TEMPERATURE No. 4 | FURNACE WALL TEMPERATURE No. 3 | FURNACE WALL TEMPERATURE No. 2 | FURNACE WALL TEMPERATURE No. 1 |
|---|---|---|---|
| 1055 °C | 1040 °C | 1049 °C | 1049 °C |

COMBUSTION LIQUID

ATOMIZED AIR

OXYGEN-ENRICHED AIR

| FURNACE TEMPERATURE No. 3 | FURNACE TEMPERATURE No. 2 | | FURNACE TEMPERATURE No. 1 |
|---|---|---|---|
| 955 °C | 1080 °C | | 1066 °C |

COG

OXYGEN-ENRICHED AIR

SECONDARY AIR

[FIG. 15]

**EXHAUST GAS TEMPERATURE VS. NOx CONCENTRATION (O2 = 12% CONVERSION)**

[FIG. 16]

[FIG. 17]

[FIG. 18]

[FIG. 19]

CORROSION RATE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2172617 A
- WO 2020135135 A1
- CN 111071995 A

- JP 2519691 B
- CN 110282606 A
- JP 1160809 A